# EUROPÄISCHE PATENTANMELDUNG

(11) **EP 3 772 627 A1**
(43) Veröffentlichungstag der Anmeldung: **10.02.2021**
(21) Anmeldenummer: 19020463.6
(22) Anmeldetag: 09.08.2019
(51) Int. Cl.: F25J 3/04

(54) **VERFAHREN UND ANLAGE ZUR TIEFTEMPERATURZERLEGUNG VON LUFT**

(71) Anmelder: Linde GmbH, 82049 Pullach (DE)
(72) Erfinder: GOLUBEV, Dimitri, 82538 Geretsried (DE)
(74) Vertreter: Imhof, Dietmar

(57) **Zusammenfassung**

Die Erfindung betrifft ein Verfahren zur Tieftemperaturzerlegung von Luft, bei dem eine Luftzerlegungsanlage (100, 200, 300, 400) mit einem zur Tieftemperaturrektifikation eingerichteten Kolonnensystem (10) verwendet wird, welches mit Druckluft gespeist wird, die verdichtet und unter Verwendung eines Adsorbers (3) an Wasser und Kohlendioxid abgereichert wird, wobei der Adsorber (3) unter Verwendung eines Regeneriergasstroms regeneriert wird, der unter Verwendung eines Gasgemischs gebildet wird, das dem Kolonnensystem (10) entnommen wird. Es ist vorgesehen, dass eine Kolonne (14) in dem Kolonnensystem (10) zur Gewinnung oder Ausschleusung von Argon oder eines argonreichen Komponentengemischs verwendet und unter Verwendung eines Seitenstroms gespeist wird, welcher einer weiteren Kolonne (13) in dem Kolonnensystem (10) entnommen wird, wobei der Regeneriergasstrom ohne Verwendung von Fluid aus der weiteren Kolonne (13) gebildet wird, und dass der Regeneriergasstrom ferner unter Verwendung weiterer Druckluft gebildet wird, welche zusammen mit der Druckluft, mit der das Kolonnensystem (10) gespeist wird, verdichtet und danach entspannt und mit dem Gasgemisch, das dem Kolonnensystem der Luftzerlegungsanlage entnommen und zur Bildung des Regeneriergasstroms verwendet wird, vereinigt wird. Eine entsprechende Anlage (100, 200, 300, 400) ist ebenfalls Gegenstand der vorliegenden Erfindung.

## Beschreibung

Die vorliegende Erfindung betrifft ein Verfahren und eine Anlage zur Tieftemperaturzerlegung von Luft gemäß den Oberbegriffen der unabhängigen Patentansprüche.

### Stand der Technik

Die Herstellung von Luftprodukten in flüssigem oder gasförmigem Zustand durch Tieftemperaturzerlegung von Luft in Luftzerlegungsanlagen ist bekannt und beispielsweise bei H.-W. Häring (Hrsg.), Industrial Gases Processing, Wiley-VCH, 2006, insbesondere Abschnitt 2.2.5, "Cryogenic Rectification", beschrieben.

Luftzerlegungsanlagen weisen Rektifikationskolonnensysteme auf, die herkömmlicherweise beispielsweise als Zweikolonnensysteme, insbesondere als klassische Linde-Doppelkolonnensysteme, aber auch als Drei- oder Mehrkolonnensysteme ausgebildet sein können. Neben den Rektifikationskolonnen zur Gewinnung von Stickstoff und/oder Sauerstoff in flüssigem und/oder gasförmigem Zustand, also den Rektifikationskolonnen zur Stickstoff-Sauerstoff-Trennung, können Rektifikationskolonnen zur Gewinnung weiterer Luftkomponenten, insbesondere der Edelgase Krypton, Xenon und/oder Argon, vorgesehen sein. Häufig werden die Begriffe "Rektifikation" und "Destillation" sowie "Kolonne" und "Säule" bzw. hieraus zusammengesetzte Begriffe synonym verwendet.

Die Rektifikationskolonnen der genannten Rektifikationskolonnensysteme werden auf unterschiedlichen Druckniveaus betrieben. Bekannte Doppelkolonnensysteme weisen eine sogenannte Hochdruckkolonne (auch als Druckkolonne, Mitteldruckkolonne oder untere Kolonne bezeichnet) und eine sogenannte Niederdruckkolonne (auch als obere Kolonne bezeichnet) auf. Die Hochdruckkolonne wird typischerweise auf einem Druckniveau von 4 bis 7 bar, insbesondere ca. 5,3 bar, betrieben. Die Niederdruckkolonne wird auf einem Druckniveau von typischerweise 1 bis 2 bar, insbesondere ca. 1,4 bar, betrieben. In bestimmten Fällen können in beiden Rektifikationskolonnen auch höhere Druckniveaus eingesetzt werden. Bei den hier und nachfolgend angegebenen Drücken handelt es sich um Absolutdrücke am Kopf der jeweils angegebenen Kolonnen.

Die einer Luftzerlegungsanlage zugeführte Luft wird zunächst im sogenannten Hauptluftverdichter auf ein Druckniveau verdichtet, das sich nach der spezifischen Betriebsweise der Luftzerlegungsanlage richtet und typischerweise bei dem höchsten Betriebsdruck in dem Destillationssäulensystem oder deutlich darüber liegen kann. Die Luft erwärmt sich bei dieser Verdichtung und wird daher anschließend zunächst in einem Direktkontaktkühler gekühlt. Diese Kühlung reduziert den Feuchtigkeitsgehalt der wassergesättigten Luft und verringert auf diese Weise den Aufwand für die anschließende Trocknung.

Die Luft enthält nun neben Wasser insbesondere noch Kohlendioxid. Wasser und Kohlendioxid müssen entfernt werden, da sich bei der anschließenden Abkühlung auf ca. 100 K im sogenannten Hauptwärmetauscher durch Desublimation bzw. Ausfrieren Feststoffe bilden können, die den Wärmetauscher sukzessive zusetzen bzw. verlegen. In der Luft enthaltene Kohlenwasserstoffe können ebenfalls problematisch sein, da sie weniger flüchtig sind als Stickstoff und Sauerstoff und sich daher im flüssigen Sauerstoff ansammeln können, der beispielsweise im Sumpf der Niederdruckkolonne gebildet wird. Zur Entfernung der genannten Komponenten werden zumindest in Luftzerlegungsanlagen neuerer Art Adsorber verwendet.

Ein Adsorber einer Luftzerlegungsanlage weist, wie bei Häring (s.o.) in Abschnitt 2.2.5.6, "Apparatus", beschrieben, typischerweise paarweise angeordnete Adsorptionsbehälter auf, die zwischen Adsorptions- und Regenerationsmodus umgeschaltet werden. Als Adsorptionsmaterial werden typischerweise Zeolithe verwendet, die als Molekularsieb wirken. Ein Adsorptionszyklus dauert typischerweise zwischen 1,5 h und 6 h und wird auf dem Druckniveau der verdichteten Luft durchgeführt. Vor der Regeneration erfolgt typischerweise innerhalb von ca. 10 min eine Druckentlastung auf Umgebungsdruck. Die Regeneration erfolgt unter Verwendung eines trockenen Regeneriergasstroms in Gegenstromrichtung. Die Regeneration unterteilt sich dabei in eine Heizphase, in der der Regeneriergasstrom erwärmt wird, und eine anschließende Kühlphase mit kaltem Regeneriergas. Es folgt eine Druckaufbauphase von ca. 20 Minuten.

Die Adsorberbehälter sind typischerweise mit Zeolithkristallen gefüllt, die mit keramischem Material verbunden und zu Kugeln von etwa 3 mm Durchmesser oder zu Stäben geformt sind. Die Zeolithkristallen weisen Poren mit Durchmessern im Bereich von ca. 1 nm auf. Wasser sowie andere polare oder leicht polarisierbare Verunreinigungen wie Kohlendioxid und verschiedene Kohlenwasserstoffe werden in den Poren zurückgehalten. Häufig ist vor der zeolithischen Schicht eine dünne Schicht aus aktiviertem Aluminiumoxid für die Adsorption von Wasser angeordnet. Die Stoffaustauschzone ist vergleichsweise kurz. Die Betthöhe liegt typischerweise bei ca. 1 m bei einem Druckverlust zwischen 20 und 50 mbar. Die Adsorberbehälter sind horizontal oder vertikal angeordnet, wobei ein axial oder radial ausgerichteter Gasfluss durch die Adsorberbehälter realisierbar ist.

Als Regeneriergas für einen Adsorber einer Luftzerlegungsanlage eignen sich unterschiedliche trockene, stickstoffreiche Gasgemische aus der üder den Adsorber mit Luft versorgten Luftzerlegungsanlage. Vorteilhafterweise werden solche Gasgemische verwendet, die eine zu geringe Reinheit aufweisen, um sie als Produkt verwenden zu können, insbesondere sogenannter Unreinstickstoff, dessen Bereitstellung nachfolgend kurz erläutert wird.

Bei einer Doppelkolonne und in vergleichbaren Kolonnenkonfigurationen einer Luftzerlegungsanlage sind die Dampf- und Flüssigkeitsströme innerhalb der einzelnen Kolonnenabschnitte nicht frei einstellbar, es sei denn, es werden zusätzliche Verstärkungskreisläufe verwendet. Bei einer energieoptimierten Prozessausführung ist es insbesondere schwierig, das gesamte Gas, das bis zum Kopf der Niederdruckkolonne aufsteigt, als reinen Stickstoff zu entnehmen. Ein Anteil von bis zu ca. 70% der aufbereiteten Luft kann jedoch je nach Betriebsweise in einer herkömmlichen Luftzerlegungsanlage als reiner Stickstoff mit geringem (Rest-) Sauerstoffgehalt von gewonnen werden, wenn Gas mit einer Sauerstoffkonzentration zwischen 0,1 und 5% einige (bzw. mehrere) Böden unterhalb des Kopfs entnommen wird. Dadurch erhöht sich das Flüssigkeit/Dampf-Verhältnis im oberen Bereich, dem so genannten Stickstoffabschnitt, so dass der Sauerstoff in diesem Bereich nach unten rektifiziert werden kann. Insbesondere solches Gas, der bereits angesprochene Unreinstickstoff, kann im Wärmetauscher erwärmt und unter anderem zusammen mit am Sumpf der Niederdruckkolonne entnommenem gasförmigem Sauerstoff als Regeneriergas verwendet werden.

In bestimmten Fällen könnte es auch vorteilhaft sein, ein anderes bzw. anders zusammengestelltes Regeneriergas in einer Luftzerlegungsanlage einzusetzen. Hierbei ist jedoch zu beachten, dass der Adsorber bzw. ein zugehöriger Erhitzer und die dazu gehörigen Regelarmaturen einen bestimmten Gegendruck aufweisen, so dass das Regeneriergas zumindest auf einem entsprechenden Druckniveau bereitgestellt werden muss. Daher ist, wenn ein Gasgemisch, das sich als Regeneriergas oder Teil eines Regeneriergases eignen würde, einen geringeren Druck aufweist, für solche Fälle ein aufwendiges Gebläse erforderlich. Entsprechende geringere Drücke können aber aus Gründen der Betriebseffizienz wünschenswert sein.

Eine derartige Druckerhöhung ist, bis auf die zusätzliche Bereitstellung des Gebläses, noch vergleichsweise einfach möglich, wenn das betrachtete Gasgemisch im Wesentlichen aus Stickstoff besteht, d.h. nur die Restgehalte von z.B. 0,1 bis 5% Sauerstoff aufweist. Allerdings ergeben sich Schwierigkeiten in Fällen, in denen beispielsweise höhere Sauerstoffgehalte vorliegen, da in diesem Fall das Gebläse als ein "Sauerstoffverdichter" hinsichtlich seinen Spezifikationen und damit im baulichen Aufwand deutlich aufwendiger ausgebildet sein muss.

Die vorliegende Erfindung stellt sich daher insbesondere die Aufgabe, einen vorteilhaften Betrieb einer Luftzerlegungsanlage sicherzustellen und gleichzeitig die Bereitstellung eines Regeneriergases in einfacher und effizienter Weise zu gewährleisten. Diese Aufgabe stellt sich insbesondere in Fällen, in denen herkömmliche Wege zur Bereitstellung des Regeneriergases aufgrund der abweichenden baulichen Ausgestaltung oder Betriebsweise des Kolonnenssystems nicht beschritten werden können oder aus bestimmten Gründen nachteilig sind.

### Offenbarung der Erfindung

Vor diesem Hintergrund schlägt die vorliegende Erfindung ein Verfahren und eine Anlage zur Tieftemperaturzerlegung von Luft mit den Merkmalen der unabhängigen Patentansprüche vor. Bevorzugte Ausgestaltungen sind jeweils Gegenstand der Unteransprüche sowie der nachfolgenden Beschreibung.

Vor der Erläuterung der Merkmale und Vorteile der vorliegenden Erfindung werden einige Grundlagen der vorliegenden Erfindung näher erläutert und nachfolgend verwendete Begriffe definiert.

Die in einer Luftzerlegungsanlage eingesetzten Vorrichtungen sind in der zitierten Fachliteratur, beispielsweise bei Häring (s.o.) in Abschnitt 2.2.5.6, "Apparatus", beschrieben. Sofern die nachfolgenden Definitionen nicht hiervon abweichen, wird daher zum Sprachgebrauch, der im Rahmen der vorliegenden Anmeldung verwendet wird, ausdrücklich auf die zitierte Fachliteratur verwiesen.

Flüssigkeiten und Gase können im hier verwendeten Sprachgebrauch reich oder arm an einer oder an mehreren Komponenten sein, wobei "reich" für einen Gehalt von wenigstens 75%, 90%, 95%, 99%, 99,5%, 99,9% oder 99,99% und "arm" für einen Gehalt von höchstens 25%, 10%, 5%, 1%, 0,1% oder 0,01% auf Mol-, Gewichts- oder Volumenbasis stehen kann. Der Begriff "überwiegend" kann der Definition von "reich" entsprechen. Flüssigkeiten und Gase können ferner angereichert oder abgereichert an einer oder mehreren Komponenten sein, wobei sich diese Begriffe auf einen Gehalt in einer Ausgangsflüssigkeit oder einem Ausgangsgas beziehen, aus der oder dem die Flüssigkeit oder das Gas gewonnen wurde. Die Flüssigkeit oder das Gas sei "angereichert", wenn diese oder dieses zumindest den 1,1-fachen, 1,5-fachen, 2-fachen, 5-fachen, 10-fachen 100-fachen oder 1.000-fachen Gehalt, und "abgereichert", wenn diese oder dieses höchstens den 0,9-fachen, 0,5-fachen, 0,1-fachen, 0,01-fachen oder 0,001-fachen Gehalt einer entsprechenden Komponente, bezogen auf die Ausgangsflüssigkeit oder das Ausgangsgas, enthält. Ist hier beispielsweise von "Sauerstoff", "Stickstoff" oder "Argon" die Rede, sei hierunter auch eine Flüssigkeit oder ein Gas verstanden, die bzw. das reich an Sauerstoff, Stickstoff oder Argon ist, jedoch nicht notwendigerweise ausschließlich hieraus bestehen muss.

Die vorliegende Anmeldung verwendet zur Charakterisierung von Drücken und Temperaturen die Begriffe "Druckbereich" und "Temperaturbereich", wodurch zum Ausdruck gebracht werden soll, dass entsprechende Drücke und Temperaturen in einer entsprechenden Anlage nicht in Form exakter Druck- bzw. Temperaturwerte verwendet werden müssen, um das erfinderische Konzept zu verwirklichen. Jedoch bewegen sich derartige Drücke und Temperaturen typischerweise in bestimmten Bereichen, die beispielsweise ± 1%, 5%, 10% oder 20% um einen Mittelwert liegen.

Entsprechende Druckbereiche und Temperaturbereiche können dabei in disjunkten Bereichen liegen oder in Bereichen, die einander überlappen. Insbesondere schließen beispielsweise Druckbereiche unvermeidliche oder zu erwartende Druckverluste ein. Entsprechendes gilt für Temperaturbereiche. Bei den hier bezüglich der Druckbereiche in bar angegebenen Werten handelt es sich um Absolutdrücke.

Ist hier von "Entspannungsmaschinen" die Rede, seien darunter typischerweise bekannte Turboexpander verstanden. Diese Entspannungsmaschinen können insbesondere auch mit Verdichtern gekoppelt sein. Bei diesen Verdichtern kann es sich insbesondere um Turboverdichter handeln. Eine entsprechende Kombination aus Turboexpander und Turboverdichter wird auch als "Turbinenbooster" bezeichnet. In einem Turbinenbooster sind der Turboexpander und der Turboverdichter mechanisch gekoppelt, wobei die Kopplung drehzahlgleich (beispielsweise über eine gemeinsame Welle) oder drehzahlunterschiedlich (beispielsweise über ein übersetzendes Getriebe) erfolgen kann. Allgemein wird hier der Begriff "Verdichter" verwendet.

Ein "Hauptluftverdichter" zeichnet sich dadurch aus, dass durch ihn die gesamte, der Luftzerlegungsanlage zugeführte und dort zerlegte Luft verdichtet wird. Hingegen wird in einem oder mehreren optional vorgesehenen weiteren Verdichtern, beispielsweise Nachverdichtern, nur jeweils ein Anteil dieser bereits zuvor im Hauptluftverdichter verdichteten Luft weiter verdichtet. Entsprechend stellt der "Hauptwärmetauscher" einer Luftzerlegungsanlage den Wärmetauscher dar, in dem zumindest der überwiegende Anteil der der Luftzerlegungsanlage zugeführten und dort zerlegten Luft abgekühlt wird. Dies erfolgt zumindest zum Teil im Gegenstrom zu Stoffströme, die aus der Luftzerlegungsanlage ausgeleitet werden. Solche "ausgeleiteten" Stoffströme oder "Produkte" sind im hier verwendeten Sprachgebrauch Fluide, die nicht mehr an anlageninternen Kreisläufen teilnehmen, sondern diesen dauerhaft entzogen werden.

Ein "Wärmetauscher" zum Einsatz im Rahmen der vorliegenden Erfindung kann in fachüblicher Art ausgebildet sein. Er dient zur indirekten Übertragung von Wärme zwischen zumindest zwei z.B. im Gegenstrom zueinander geführten Fluidströmen, beispielsweise einem warmen Druckluftstrom und einem oder mehreren kalten Fluidströmen oder einem tiefkalten flüssigen Luftprodukt und einem oder mehreren warmen bzw. wärmeren, ggf. aber auch noch tiefkalten Fluidströmen. Ein Wärmetauscher kann aus einem einzelnen oder mehreren parallel und/oder seriell verbundenen Wärmetauscherabschnitten gebildet sein, z.B. aus einem oder mehreren Plattenwärmetauscherblöcken. Es handelt sich beispielsweise um einen Plattenwärmetauscher (engl. Plate Fin Heat Exchanger). Ein derartiger Wärmetauscher weist "Passagen" auf, die als voneinander getrennte Fluidkanäle mit Wärmeaustauschflächen ausgebildet und parallel und durch andere Passagen getrennt zu "Passagengruppen" zusammengeschlossen sind. Kennzeichen eines Wärmetauschers ist, dass in ihm zu einem Zeitpunkt Wärme zwischen zwei mobilen Medien ausgetauscht wird, nämlich wenigstens einem abzukühlenden und wenigstens einem zu erwärmenden Fluidstrom.

Als "Kondensatorverdampfer" wird ein Wärmetauscher bezeichnet, in dem ein erster, kondensierender Fluidstrom in indirekten Wärmeaustausch mit einem zweiten, verdampfenden Fluidstrom tritt. Jeder Kondensatorverdampfer weist einen Verflüssigungsraum und einen Verdampfungsraum auf. Verflüssigungs- und Verdampfungsraum weisen Verflüssigungs- bzw. Verdampfungspassagen auf. In dem Verflüssigungsraum wird die Kondensation (Verflüssigung) des ersten Fluidstroms durchgeführt, in dem Verdampfungsraum die Verdampfung des zweiten Fluidstroms. Der Verdampfungs- und der Verflüssigungsraum werden durch Gruppen von Passagen gebildet, die untereinander in Wärmeaustauschbeziehung stehen.

In einem "Forced-Flow"-Kondensatorverdampfer wird ein Flüssigkeits- oder Zweiphasenstrom mittels seines eigenen Drucks durch den Verdampfungsraum gedrückt und dort partiell oder vollständig verdampft. Dieser Druck kann beispielsweise durch eine Flüssigkeitssäule in der Zuleitung zum Verdampfungsraum erzeugt werden. Die Höhe dieser Flüssigsäule entspricht dabei dem Druckverlust im Verdampfungsraum. Das aus dem Verdampfungsraum austretende Gas-Flüssigkeitsgemisch wird in einem "Once Through"-Kondensatorverdampfer dieser Art nach Phasen getrennt direkt zum nächsten Verfahrensschritt bzw. zu einer stromabwärtigen Vorrichtung weitergeleitet und insbesondere nicht in ein Flüssigkeitsbad des Kondensatorverdampfers eingeleitet, von dem der flüssig verbliebene Anteil erneut angesaugt würde.

Die relativen räumlichen Begriffe "oben", "unten", "über", "unter", "oberhalb", "unterhalb", "neben", "nebeneinander", "vertikal", "horizontal" etc. beziehen sich hier auf die räumliche Ausrichtung der Rektifikationskolonnen einer Luftzerlegungsanlage oder anderer Komponenten im Normalbetrieb. Unter einer Anordnung zweier Komponenten "übereinander" wird hier verstanden, dass das sich obere Ende der unteren der beiden Komponenten auf niedrigerer oder gleicher geodätischer Höhe befindet wie das untere Ende der oberen der beiden Komponenten und sich die Projektionen der beiden Apparateteile in einer horizontalen Ebene überschneiden. Insbesondere sind die beiden Komponenten genau übereinander angeordnet, das heißt die Achsen der beiden Komponenten verlaufen auf derselben vertikalen Geraden. Die Achsen der beiden Komponenten müssen jedoch nicht genau senkrecht übereinander liegen, sondern können auch gegeneinander versetzt sein, insbesondere wenn einer der beiden Komponenten, beispielsweise eine Rektifikationskolonne oder ein Kolonnenteil mit geringerem Durchmesser, denselben Abstand zum Blechmantel einer Coldbox aufweisen soll wie ein anderer mit größerem Durchmesser.

### Vorteile der Erfindung

Die vorliegende Erfindung schlägt ein Verfahren zur Tieftemperaturzerlegung von Luft vor, bei dem eine Luftzerlegungsanlage mit einem zur Tieftemperaturrektifikation eingerichteten Kolonnensystem verwendet wird, welches mit Druckluft gespeist wird, die verdichtet und unter Verwendung eines Adsorbers an Wasser und Kohlendioxid abgereichert wird. Diese Abreicherung kann insbesondere eine im Wesentlichen vollständige Entfernung der genannten und weiterer Komponenten umfassen. Der Adsorber wird unter Verwendung eines Regeneriergasstroms regeneriert, der, wie insoweit bekannt, unter Verwendung eines Gasgemischs gebildet, das dem Kolonnensystem entnommen wird, und das insbesondere einen Sauerstoffgehalt von bis zu 55% aufweist. Wie nachfolgend erläutert, kann es sich dabei insbesondere um ein Gasgemisch aus einem sogenannten Argonkondensator handeln.

Im Rahmen der vorliegenden Erfindung kann die Druckluft, mit der das Kolonnensystem gespeist wird, insbesondere auf einen Druck in einem ersten Druckbereich verdichtet werden, und der Regeneriergasstrom kann dem Adsorber insbesondere auf einem Druck in einem zweiten Druckbereich unterhalb des ersten Druckbereichs zugeführt werden. Das Gasgemisch, das dem Kolonnensystem entnommen und unter Verwendung dessen der Regeneriergasstrom gebildet wird, kann dem Kolonnensystem insbesondere auf einem Druck in einem dritten Druckbereich entnommen werden. Dabei liegt der dritte Druckbereich oberhalb des zweiten Druckbereichs. Das dem Kolonnensystem entnommene, zur Bildung des Regeneriergasstroms verwendete Gasgemisch weist also insbesondere einen Druck auf, der höher ist, als er zur Regenerierung des Adsorbers verwendet wird. Ein solcher höherer Druck wird verwendet, damit alle Druckverluste im Regeneriergasweg, die z.B. in einem Unterkühlungsgegenströmer, den verbindenen Leitungen, dem Hauptwärmetauscher, dem Adsorber, einem Regeneriergaserhitzer und Regelarmaturen auftreten, überwunden werden können.

Eine Kolonne in dem Kolonnensystem wird im Rahmen der vorliegenden Erfindung zur Gewinnung oder Ausschleusung von Argon oder eines argonreichen Komponentengemischs verwendet (nachfolgend auch als "Argonkolonne" bezeichnet) und diese Kolonne wird unter Verwendung eines Seitenstroms gespeist, welcher einer weiteren Kolonne in dem Kolonnensystem (insbesondere einer Niederdruckkolonne) entnommen wird, wobei der Regeneriergasstrom ohne Verwendung von Fluid aus der weiteren Kolonne gebildet wird. Weitere Details werden unten noch erläutert.

Der Regeneriergasstrom wird erfindungsgemäß ferner unter Verwendung weiterer Druckluft gebildet, welche zusammen mit der Druckluft, mit der das Kolonnensystem gespeist wird, verdichtet und danach, insbesondere separat von der Druckluft, mit der das Kolonnensystem gespeist wird, entspannt und mit dem Gasgemisch, das dem Kolonnensystem der Luftzerlegungsanlage entnommen und zur Bildung des Regeneriergasstroms verwendet wird, vereinigt wird. Diese Entspannung erfolgt derart, dass der Druck der entspannten Druckluft ausreichend hoch ist, um die entspannte Druckluft mit dem Gasgemisch, das dem Kolonnensystem entnommen und zur Bildung des Regeneriergasstroms verwendet wird, vereinigen zu können, aber nicht auf einen thermodynamisch betrachtet günstigeren (geringeren) Druck.

Die weitere Druckluft, unter Verwendung derer der Regeneriergasstrom gebildet wird, kann dabei insbesondere auf einen Druck in einem vierten Druckbereich zwischen dem zweiten und dem dritten Druckbereich oder auf einen Druck in dem dritten Druckbereich entspannt werden.

Ist zuvor von Drücken in einem "ersten", "zweiten", "dritten" und "vierten" Druckbereich die Rede, handelt es sich hierbei insbesondere um Druckbereiche, die einander nicht überlappen, auch wenn die jeweiligen Bereichsangaben eine entsprechende Überlappung zulassen sollten. Insbesondere überlappt der erste Druckbereich einerseits nicht mit dem zweiten, dritten und vierten Druckbereich andererseits.

Die Entspannung des Teils der Druckluft, der zur Bildung des Regeneriergasstroms verwendet wird, kann insbesondere arbeitsleistend erfolgen. Bei der Entspannung freiwerdende Kälte kann insbesondere in der Luftzerlegungsanlage genutzt werden, indem der Teil der Druckluft, der zur Bildung des Regeneriergasstroms verwendet wird und dazu entsprechend entspannt wurde, zumindest zu einem Anteil im Hauptwärmetauscher der Luftzerlegungsanlage erwärmt wird.

Die Erwärmung kann dabei gemeinsam mit oder getrennt von dem Gasgemisch, das dem Kolonnensystem der Luftzerlegungsanlage entnommen und zur Bildung des Regeneriergasstroms verwendet wird, oder einem Teil davon, erfolgen. Das Gasgemisch, das dem Kolonnensystem der Luftzerlegungsanlage entnommen und zur Bildung des Regeneriergasstroms verwendet wird, wird also in jedem Fall ebenfalls zumindest zu einem Anteil entsprechend erwärmt. Erfolgt die Erwärmung gemeinsam mit dem Gasgemisch, das dem Kolonnensystem der Luftzerlegungsanlage entnommen und zur Bildung des Regeneriergasstroms verwendet wird, oder einem Teil davon, kann eine Vereinigung innerhalb des Hauptwärmetauschers und eine Erwärmung in einer gemeinsamen Wärmetauscherpassage desselben erfolgen. Erfolgt die Erwärmung getrennt von dem Gasgemisch, das dem Kolonnensystem der Luftzerlegungsanlage entnommen und zur Bildung des Regeneriergasstroms verwendet wird, oder einem Teil davon, findet diese dagegen in separaten, voneinander getrennten Wärmetauscherpassagen statt und eine Vereinigung erfolgt warmseitig des Hauptwärmetauschers.

Vor der Entspannung des Teils der Druckluft, der zur Bildung des Regeneriergasstroms verwendet wird, kann dieser zumindest zu einem Anteil in dem Hauptwärmetauscher auf eine Temperatur in einem ersten Temperaturbereich unterhalb des ersten Temperaturbereichs von insbesondere -90 bis -30 °C abgekühlt und auf dieser Temperatur der Entspannung unterworfen werden. Durch die Entspannung ergibt sich eine weitere Abkühlung auf eine Temperatur in einem zweiten Temperaturbereich von insbesondere -173 bis -113 °C, auf dem die Druckluft dem Hauptwärmetauscher zur Erwärmung zugeführt wird.

Das Gasgemisch, das dem Kolonnensystem der Luftzerlegungsanlage entnommen und zur Bildung des Regeneriergasstroms verwendet wird, kann, wie bereits mehrfach erwähnt und hier nochmals mit anderen Worten ausgedrückt, insbesondere ein Gasgemisch sein, das einem Verdampfungsraum eines Kondensatorverdampfers entnommen wird, in dessen Kondensationsraum Kopfgas der bereits erwähnten, zur Gewinnung oder Ausschleusung von Argon oder eines argonreichen Komponentengemischs eingerichteten Kolonne kondensiert wird, also eines sogenannten "Argonkondensators". Die zur Gewinnung oder Ausschleusung von Argon oder eines argonreichen Komponentengemischs eingerichtete Kolonne wird, wie ebenfalls erwähnt, unter Verwendung eines Seitenstroms aus einer weiteren Kolonne gespeist werden, die bei einem geringeren oder höheren Druck als der Verdampfungsraum des Kondensatorverdampfers betrieben werden kann. Insbesondere kann ein Betrieb in einem Druckbereich zwischen dem in einer Ausgestaltung erwähnten zweiten und dritten Druckbereich oder in einem Druckbereich oberhalb des dritten Druckbereichs verwendet werden. Der weiteren Kolonne wird eine sauerstoffreiche Sumpfflüssigkeit entnommen. Bei dieser weiteren Kolonne handelt es sich insbesondere um eine klassische Niederdruckkolonne. Die Angabe, dass die Kolonne "unter Verwendung" des Seitenstroms gespeist wird, schließt nicht aus, dass dieser Seitenstrom vorab, beispielsweise in einer weiteren Kolonne, bearbeitet und in seiner stofflichen Zusammensetzung verändert wird.

Das Kolonnensystem der erfindungsgemäß betriebenen Luftzerlegungsanlage kann herkömmlich ausgebildet sein, aber auch in jeder denkbaren Variante, in der ein zur Bildung eines Regeneriergasstroms verwendbares Gasgemisch der zuvor erläuterten Art gebildet werden kann.

Wie erwähnt, wird der Regeneriergasstrom ohne Verwendung von Fluid aus der weiteren Kolonne, also der Niederdruckkolonne, gebildet. Insbesondere kann der Regeneriergasstrom ausschließlich oder zumindest zu 90% aus dem Gasgemisch, das dem Kolonnensystem auf dem dritten Druckniveau entnommen wird, und aus der auf das vierte Druckniveau entspannten Druckluft gebildet werden.

Durch diese Maßnahme erreicht man, dass diese weitere Kolonne unter einem geringeren Druck betrieben werden kann, als er zur Bereitstellung von Regeneriergas erforderlich ist, weil man keinen Unreinstickstoff aus dieser weiteren Kolonne zur Regenerierung verwenden muss. Hierdurch ergibt sich ein energetisch günstigerer (sparsamerer) Betrieb der Anlage. In der vorliegenden Erfindung kann in einem solchen Fall die (als Regeneriergas nicht ausreichende) Menge des Gasgemischs aus dem Verdampfungsraum des Argonkondensators mit der in der erläuterten Weise behandelten Druckluft zur Bildung des Regeneriergasstroms vereinigt werden, so dass eine ausreichende Regeneriergasmenge bereitgestellt werden kann. Der Druck in dem Verdampfungsraum, der in dem dritten Druckbereich liegt, ist höher als in der weiteren Kolonne, so dass die erwähnten Druckverluste überwunden werden können. Die anderenfalls erforderliche Nachverdichtung und Beimischung von Gas aus der weiteren Kolonne kann daher entfallen. Wie nachfolgend auch noch erläutert, ist es aber auch möglich, einen Betrieb einer Niederdruckkolonne bei einem Druck oberhalb des dritten Druckbereichs vorzunehmen.

Die vorliegende Erfindung eignet sich für alle Arten von Luftzerlegungsanlagen, in denen im Kolonnensystem (im Wesentlichen) wasser- und kohlendioxidfreie Gasgemische anfallen, die in dem dritten Druckbereich bereitgestellt werden können, auch wenn diese in der Menge nicht ausreichen. Entsprechende Gasgemische fallen im hier verwendeten Sprachgebracuh auch dann "im Kolonnensystem" an, wenn sie in einem Verdampfungsraum eines Kondensatorverdampfers anfallen, der seinerseits Teil des Kolonnensystems ist, indem er Kopfgas einer Kolonne kondensiert. Eine Mindermenge eines solchen Gasgemischs kann durch Verwendung von Gas aus der Niederdruckkolonne ausgeglichen werden, herkömmlicherweise allerdings nicht ohne Verwendung zusätzlicher Gebläse, wie zuvor erläutert. Im Rahmen der vorliegenden Erfindung kann ein entsprechender Ausgleich dagegen unter Verwendung der entspannten Druckluft erfolgen.

Das Gasgemisch, das dem Kolonnensystem entnommen und zur Bildung des Regeneriergasstroms verwendet wird, kann insbesondere 25 bis 60 Molprozent Sauerstoff, beispielsweise ca. 47 Molprozent Sauerstoff, und im verbleibenden Rest überwiegend (neben Restmengen an beispielsweise Argon) Stickstoff aufweisen. Es kann, wie erwähnt, einem Argonkondensator entnommen werden.

Die vorliegende Erfindung eignet sich insbesondere für Luftzerlegungsanlagen bzw. Kolonnensysteme, in denen neben einem Doppelkolonnensystem eine zur Gewinnung von Druckstickstoff eingerichtete und auf einem höheren Druckniveau betriebene Kolonne und zusätzlich die Kolonne zur Argongewinnung bzw. Argonausschleusung vorgesehen ist. Eine solche Anordnung wird nachfolgend im Detail erläutert.

Insbesondere zur Versorgung von Halbleiterwerken (sogenannten Fabs) wird neben gasförmigem, hochreinem und möglichst partikelfreiem Stickstoff und ggf. Sauerstoff zunehmend auch die Versorgung mit vergleichsweise geringen Mengen an gasförmigem Argon gewünscht. Hierzu kann entweder Flüssigargon angeliefert oder und vor Ort verdampft werden, oder es kann eine Gewinnung von gasförmigem Argon vor Ort erfolgen. Die Anlieferung von Flüssigargon bringt nicht nur ökonomische Nachteile (Transportkosten, Umtankverluste, Kälteverluste bei Verdampfung gegen Umgebungsluft) mit sich, sondern stellt auch hohe Anforderungen an die Zuverlässigkeit der Logistikkette. Daher werden für die genannten Anwendungsgebiete zunehmend Anlagen zur Tieftemperaturzerlegung von Luft nachgefragt, die neben größeren Mengen an gasförmigem, hochreinem Stickstoff auch kleinere Mengen an gasförmigem Argon liefern können. Der produzierte Stickstoff sollte typischerweise nur ca. 1 ppb, maximal 1000 ppb, Sauerstoff aufweisen, im Wesentlichen partikelfrei sein, und auf einem deutlich überatmosphärischen Druckniveau geliefert werden können. Angaben in ppb bzw. ppm beziehen sich hier auf den molaren Anteil.

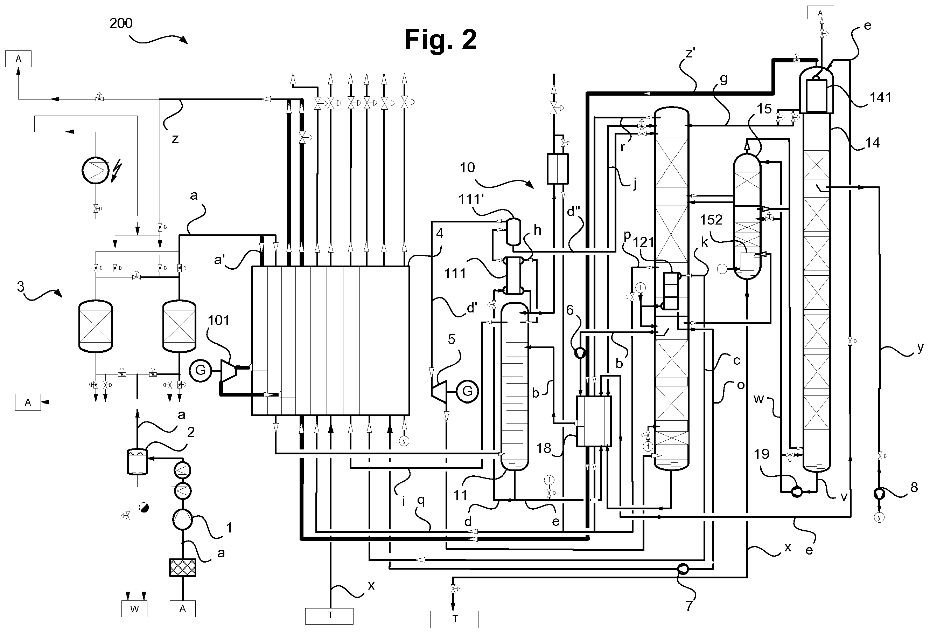

Zur Argongewinnung werden typischerweise Luftzerlegungsanlagen mit Doppelkolonnensystemen und sogenannten Roh- und ggf. sogenannten Reinargonkolonnen eingesetzt. Ein Beispiel ist bei Häring (s.o.) in Figur 2.3A veranschaulicht und ab Seite 26 im Abschnitt "Rectification in the Low-pressure, Crude and Pure Argon Column" sowie ab Seite 29 im Abschnitt "Cryogenic Production of Pure Argon" beschrieben. Grundsätzlich kann in entsprechenden Anlagen auch auf eine Reinargonkolonne verzichtet werden, wenn die betreffenden Rektifikationskolonnen entsprechend ausgebildet werden. Reinargon kann dann aus der Rohargonkolonne bzw. einer vergleichbaren Kolonne typischerweise etwas weiter unterhalb als das herkömmlicherweise in die Reinargonkolonne überführte Fluid abgezogen werden, ein oberhalb der Entnahmestelle angeordneter Trennabschnitt der Kolonne dient zur Abtrennung von Stickstoff.

Auch wenn nur vergleichsweise geringe Argonmengen nachgefragt werden, muss herkömmlicherweise dennoch für die Produktion des gasförmigen Argons eine komplette (d.h. mit klassischer Niederdruckkolonne zur Sauerstoffgewinnung ausgestattete) Luftzerlegungsanlage mit Doppelkolonne und Argonrektifikation installiert werden, wie sie zuvor erläutert wurde. Die Erzeugung von Stickstoff auf einem deutlich überatmosphärischen Druckniveau bei gleichzeitig großen Produktionsmengen ist in derartigen Anlagen mit vernünftigen Ausbeuten nicht möglich. Der Stickstoff fällt hier zum Großteil als Niederdruckprodukt an und muss verdichtet werden. Der restliche Teil kann unter Drucksäulendruck gewonnen werden, muss aber in meisten Fällen ebenfalls nachverdichtet werden. In alternativen Anlagenkonfigurationen, in denen ausschließlich die Hochdruckkolonne zur Stickstoffproduktion verwendet wird kann zwar die Verdichtung von Stickstoff aus der Niederdruckkolonne entfallen, jedoch nicht der Nachverdichter. Außerdem liegen hier in der Regel schlechte Stickstoffausbeuten vor und entsprechende Anlagen sind auch nicht gut für die Argonproduktion geeignet.

Zur Gewinnung von gasförmigem Stickstoff auf einem deutlich überatmosphärischen Druckniveau bei gleichzeitig großen Produktionsmengen, wie für die zuvor erwähnten Szenarien gefordert, können angepasste Luftzerlegungsanlagen verwendet werden, die neben den zwei herkömmlichen Kolonnen, die insbesondere Teil eines Doppelkolonnensystems sein können, eine zusätzliche Hochdruckkolonne aufweisen, welche bei nochmals höherem Druck als die übliche Hochdruckkolonne, beispielsweise bei 8 bis 12 bar, betrieben wird. Gasförmiger Stickstoff kann als Kopfprodukt aus dieser zusätzlichen Hochdruckkolonne entnommen werden und muss, falls er bei einem entsprechenden Druckniveau benötigt wird, nicht mehr verdichtet werden, so dass kein entsprechender Verdichter zur Verdichtung von gasförmigem Stickstoff vorhanden ist. Die zusätzliche Kolonne wird mit einem Kondensatorverdampfer betrieben, der Kopfgas der zusätzlichen Kolonne kondensiert, so dass ein Rücklauf auf die zusätzliche Kolonne bereitgestellt werden kann.

Die Luftzerlegungsanlage weist in dieser Ausgestaltung damit eine erste Kolonne (nämlich die weitere Hochdruckkolonne), eine zweite Kolonne (entsprechend einer regulären Hochdruckkolonne), eine dritte Kolonne (nämlich die zuvor erwähnte weitere Kolonne, der der Seitenstrom entnommen wird, mittels welchem die zur Gewinnung oder Ausschleusung von Argon oder des argonreichen Komponentengemischs eingerichtete Kolonne gespeist wird bzw. eine Niederdruckkolonne) und eine vierte Kolonne (nämlich die zur Gewinnung oder Ausschleusung von Argon oder des argonreichen Komponentengemischs eingerichtete Kolonne) auf.

Die erste bis dritte Kolonne gehen in einer solchen Luftzerlegungsanlage damit insbesondere aus der Erweiterung eines klassischen, aus dem Stand der Technik bekannten Doppelkolonnensystems um eine zusätzliche, auf einem höheren Druck als die herkömmlicherweise vorhandene Hochdruckkolonne betriebene weitere Hochdruckkolonne hervor, wie erwähnt. Zur Gewinnung von Argon oder eines argonreichen Gasgemischs, oder auch zur reinen Argonausschleusung zur Verbesserung der Trennung in der dritten Kolonne ist das Kolonnensystem um die vierte Kolonne, die wie eine herkömmliche Rohargonkolonne (oder eine zur direkten Gewinnung von Argon eingerichtete Kolonne) ausgebildet ist, erweitert. Die vierte Kolonne stellt in dieser Ausgestaltung der Erfindung also die zuvor angesprochene, zur Gewinnung oder Ausschleusung von Argon oder des argonreichen Komponentengemischs eingerichtete Kolonne dar, die mit dem Kondensatorverdampfer betrieben wird.

Hierbei kann, wie auch unter Bezugnahme auf die beigefügten Zeichnungen noch näher erläutert, die erste Kolonne insbesondere baulich separat zur zweiten und dritten Kolonne bereitgestellt sein, wobei die zweite und die dritte Kolonne insbesondere Teil einer Doppelkolonne sein können und mittels eines entsprechenden Kondensatorverdampfers, dem sogenannten Hauptkondensator, in wärmetauschender Verbindung miteinander stehen können. Es können jedoch auch abweichende Anordnungen hiervon getroffen werden; die vorliegende Erfindung ist durch die soeben vorgenommenen Erläuterungen nicht beschränkt. Die vierte Kolonne kann an die dritte Kolonne weitgehend vergleichbar wie an eine Niederdruckkolonne eines herkömmlichen Kolonnensystems angeschlossen werden.

Insbesondere können die zweite und die dritte Kolonne, die als Teil einer Doppelkolonne ausgebildet sind, in einem entsprechenden Mehrfachkolonnensystem auch um eine zusätzliche Kolonne ergänzt werden, oder die zweite und die dritte Kolonne können als separate Kolonnen bereitgestellt werden. Der erwähnte Hauptkondensator kann als innenliegender oder als außenliegender Hauptkondensator bereitgestellt werden, wie grundsätzlich aus dem Stand der Technik bekannt. Bei Einsatz eines innenliegenden Hauptkondensators ist dieser zumindest teilweise in einer Sumpfflüssigkeit im Sumpf der dritten Kolonne untergetaucht und ein zu kondensierendes Kopfgas aus der zweiten Kolonne wird durch einen Kondensationsraum des Hauptkondensators geführt.

Wie ebenfalls insoweit aus dem Bereich der Luftzerlegung bekannt und üblich, wird in der ersten Kolonne eine erste Sumpfflüssigkeit gebildet, in der zweiten Kolonne wird eine zweite Sumpfflüssigkeit gebildet, in der dritten Kolonne wird eine dritte Sumpfflüssigkeit (nämlich die erwähnte sauerstoffreiche Sumpfflüssigkeit) gebildet und in der vierten Kolonne wird eine vierte Sumpfflüssigkeit gebildet. Anders als die erste bis dritte Kolonne dient die vierte Kolonne in einer derartigen Ausgestaltung zur Argongewinnung bzw. Argonausschleusung aus einem Gasgemisch, das aus der dritten Kolonne entnommen wird. Die vierte Kolonne kann, wie bereits zuvor angesprochen, insbesondere eine herkömmliche Rohargonkolonne einer bekannten Anordnung mit Roh- und Reinargonkolonne sein, es kann sich jedoch auch um eine modifizierte Argonkolonne handeln, der ohne Verwendung einer zusätzlichen Reinargonkolonne Argon in reinem Zustand unterhalb des Kopfs entnommen wird. Auch andere Varianten sind im Rahmen der vorliegenden Erfindung möglich.

Im Rahmen der soeben angesprochenen Ausgestaltung der Erfindung kann die erste Kolonne in einem fünften Druckbereich betrieben werden, der dem zuvor in einer Ausgestaltung angegebenen ersten Druckbereich entsprechen kann, die zweite Kolonne kann in einem sechsten Druckbereich, der unterhalb des fünften Druckbereichs liegt, betrieben werden und die dritte Kolonne kann in einem siebten Druckbereich, der unterhalb des sechsten (und damit auch des fünften) Druckbereichs liegt, betrieben werden.

Es sei ausdrücklich zu verstehen gegeben, dass der "fünfte", "sechste" und "siebte" Druckbereich hier auch unabhängig davon verwendet werden können, ob die zuvor erläuterten "ersten", "zweiten", "dritten" und "vierten" Druckbereiche verwendet werden. Die Bezeichnungen des "fünften", "sechsten" und "siebten" Druckbereichs werden hier im Wesentlichen zur eindeutigen Identifizierung bei späterer Bezugnahme verwendet und sind nicht notwendigerweise als auf die "ersten", "zweiten", "dritten" und "vierten" Druckbereiche bezogen zu verstehen.

Der siebte Druckbereich ist der bereits bezüglich der "weiteren Kolonne" erwähnte Druckbereich und kann zwischen dem zweiten und dem dritten Druckbereich, aber auch oberhalb des dritten Druckbereichs liegen. Die vierte Kolonne kann insbesondere in dem siebten Druckbereich betrieben werden oder in einem geringfügig darunter liegenden Druckbereich, der sich insbesondere aus Druckverlusten über die die dritte und vierte Kolonne verbindenden Leitungen ergeben kann. Der zuvor erwähnte dritte Druckbereich, auf dem das Gasgemisch aus dem Kolonnensystem entnommen wird, welches zur Bereitstellung des Regeneriergasstroms verwendet wird, kann damit insbesondere oberhalb oder unterhalb des siebten Druckbereichs liegen. Dieser dritte Druckbereich ist insbesondere ein Verdampfungsdruck in dem erwähnten, zur Kondensation von Kopfgas der vierten Kolonne verwendeten Argonkondensator.

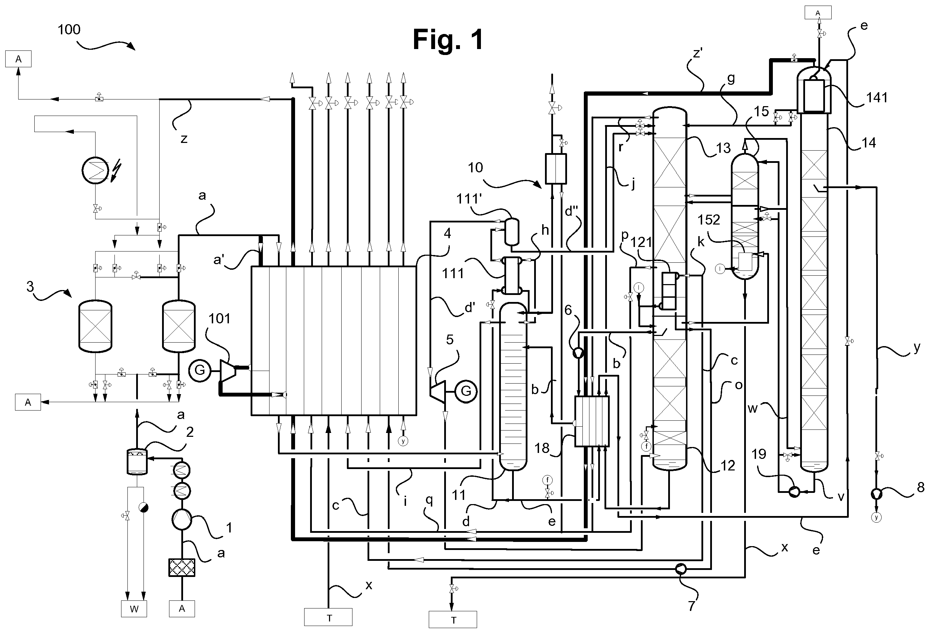

Liegt der siebte Druckbereich zwischen dem zweiten und dritten Druckbereich, wie auch in den Ausgestaltungen gemäß den Figuren 1, 2 und 4 der Fall, wäre eine Verwendung von Gas aus der dritten Kolonne zur Regeneration ohne eine weitere, nachteilige Verdichtung zur Bereitstellung des Regeneriergasstroms nicht möglich. Daher hat hier die erfindungsgemäße Verwendung der entspannten Luft besondere Vorteile. In diesem Fall wird der Kondensatorverdampfer insbesondere mit zumindest einem Teil der ersten Sumpfflüssigkeit gespeist.

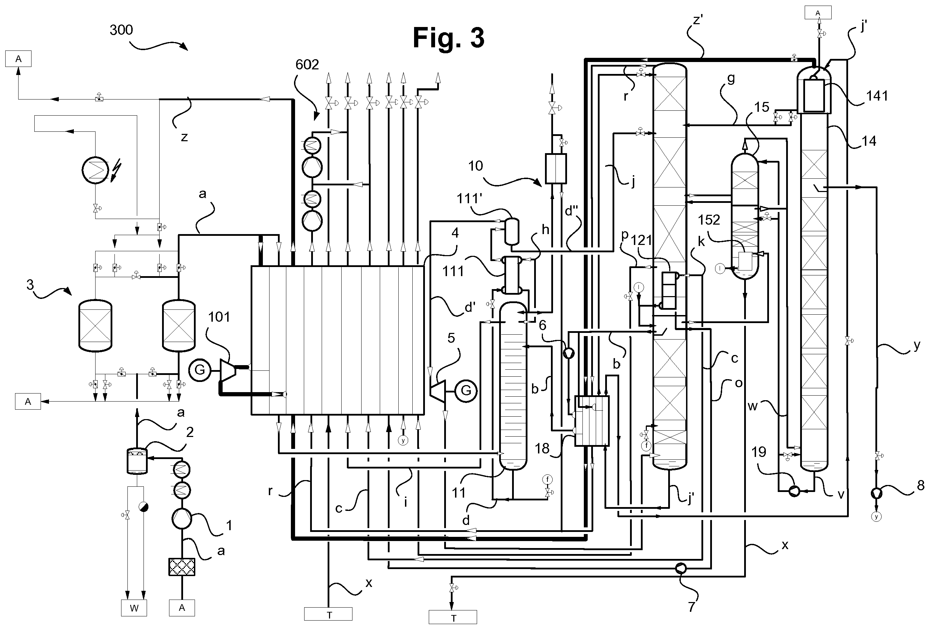

Der Kondensatorverdampfer kann aber auch mit zumindest einem Teil der zweiten Sumpfflüssigkeit gespeist werden. Der siebte Druckbereich liegt dann insbesondere oberhalb des dritten Druckbereichs, wie in der Ausgestaltung gemäß Figur 3 der Fall. Um mit der (relativ warmen) zweiten Sumpfflüssigkeit das Gas am Kopf der vierten Kolonne kondensieren zu können, muss der Druck in der dritten Kolonne etwas angehoben werden und liegt demnach etwas über den Druck im Verdampfungsraum des Kondensatorverdampfers. Dies wirkt sich zwar nachteilig auf die Kälteleistung einer verwendeten Entspannungsturbine (Bezugszeichen 5), deren Austrittsdruck dadurch "angehoben" wird, aus; der höhere Druck in der dritten Kolonne geht aber nicht "verloren", da dadurch ein höherer Ansaugdruck und (als Folge) eine geringere Leistungsaufnahme am eines Niederdruckstickstoffverdichters erreicht wird.

Im Rahmen der erläuterten Ausgestaltung kann die zweite Sumpfflüssigkeit mit einem höheren Sauerstoffgehalt und einem höheren Argongehalt als die erste Sumpfflüssigkeit gebildet werden und die dritte Sumpfflüssigkeit kann mit einem höheren Sauerstoffgehalt und einem geringeren Argongehalt als die zweite Sumpfflüssigkeit gebildet werden. Der höhere Argongehalt der zweiten Sumpfflüssigkeit gegenüber jenem der ersten Sumpfflüssigkeit ergibt sich dabei durch die unterschiedlichen Betriebsbedingungen, insbesondere die unterschiedlichen Drücke, die zum Betrieb der ersten und zweiten Kolonne verwendet werden, sowie durch unterschiedliche Zusammensetzungen von Stoffströmen, die in die erste und zweite Kolonne eingespeist werden. Hingegen ergibt sich der geringere Argongehalt in dritten Kolonne insbesondere daraus, dass aus dieser dritten Kolonne ein an Argon angereichertes Gas entnommen wird, wie nachfolgend noch erläutert. Die vierte Sumpfflüssigkeit kann als argonreiche Flüssigkeit gebildet und zur Bereitstellung eines entsprechenden Argonprodukts verwendet werden.

Insbesondere kann der Sauerstoffgehalt der Sumpfflüssigkeit der ersten Kolonne in dieser Ausgestaltung bei 28 bis 40%, insbesondere bei ca. 34%, der Sauerstoffgehalt der Sumpfflüssigkeit der zweiten Kolonne bei ca. 45 bis 65%, insbesondere bei ca. 55%, und der Sauerstoffgehalt der Sumpfflüssigkeit der dritten Kolonne bei ca. 99,0 bis 99,9%, insbesondere bei ca. 99,5%, liegen. Ein Sauerstoffgehalt in der Sumpfflüssigkeit der vierten Kolonne kann insbesondere 87 bis 97%, der Argongehalt darin insbesondere ca. 13 bis 3% betragen und der Stickstoffgehalt kann im ppm-Bereich liegen. Die jeweiligen Prozentangaben beziehen sich dabei auf den molaren Gehalt von Sauerstoff bzw. Argon in einem entsprechenden Komponentengemisch. Die dritte Kolonne wird daher im Rahmen der vorliegenden Erfindung als Reinsauerstoffkolonne genutzt und aus dieser kann ein entsprechendes reines Sauerstoffprodukt, die mehrfach erwähnte sauerstoffreiche Sumpfflüssigkeit, abgezogen werden. Dagegen werden die erste und die zweite Sumpfflüssigkeit typischerweise nicht als Produkt verwendet, sondern in der Anlage weiter aufbereitet.

Im Rahmen der soeben erläuterten Ausgestaltung der Erfindung wird allgemein Fluid aus der ersten Kolonne zumindest in die zweite Kolonne eingespeist. Das aus der ersten Kolonne in die zweite Kolonne eingespeiste Fluid kann insbesondere Sumpfflüssigkeit der ersten Kolonne umfassen, die verdampft, entspannt und in die zweite Kolonne eingeleitet wird. Insbesondere kann Fluid aus der ersten Kolonne in die zweite und in die dritte Kolonne eingespeist werden. Fluid aus der zweiten Kolonne wird zumindest in die dritte Kolonne eingespeist, Fluid aus der dritten Kolonne wird zumindest in die vierte Kolonne eingespeist, und Fluid aus der vierten Kolonne wird zumindest in die dritte Kolonne eingespeist.

Ist hier jeweils davon die Rede, dass "Fluid" aus einer Kolonne "zumindest" in eine andere eingespeist wird, sei hierunter insbesondere eine direkt oder indirekte Überführung eines entsprechenden Fluidstroms verstanden. Insbesondere kann die Überführung entsprechenden Fluids auch zunächst die Einspeisung in einem Kondensatorverdampfer bzw. dessen Verdampfungsraum umfassen, aus welchem dann flüssige und/oder gasförmige Anteile in die andere Kolonne überführt werden. Auch diese Fluidführung fällt damit unter die Überführung eines Fluids von einer in die andere Kolonne. Entsprechendes gilt auch, wenn ein entsprechendes Fluid nur teilweise überführt wird, beispielsweise wenn es an bestimmten Komponenten an- oder abgereichert und/oder in Teilströme aufgeteilt wird.

Die überführten Fluide können Kopfgase, Sumpfflüssigkeiten und/oder Seitenströme entsprechender Kolonnen umfassen. Unter einem "Seitenstrom" wird dabei ein Stoffstrom verstanden, der einer entsprechenden Kolonne zwischen unterschiedlichen Trennböden bzw. Trennabschnitten entnommen wird, wohingegen das Kopfgas ein Gasgemisch bezeichnet, das der Kolonne oberhalb des obersten Trennbodens bzw. Trennbereichs entnommen wird und eine Sumpfflüssigkeit die Flüssigkeit bezeichnet, die aus einer entsprechenden Kolonne unterhalb des untersten Trennbodens bzw. Trennbereichs entnommen wird. Eine Sumpfflüssigkeit wird insbesondere in Form eines flüssigen Stoffstroms, ein Kopfgas insbesondere in Form eines gasförmigen Stoffstroms ausgeleitet. Es können jedoch auch beispielsweise direkt oberhalb des Sumpfs, jedoch noch unterhalb des untersten Trennabschnitts bzw. des untersten Trennbodens, flüssige oder gasförmige Stoffströme entnommen werden. Ein Seitenstrom kann in flüssigem oder gasförmigem Zustand vorliegen. Ein flüssiger Seitenstrom kann beispielsweise aus einer Flüssigkeitsrückhalteeinrichtung oder von einem Stauboden entnommen werden.

Im Rahmen der soeben erläuterten Ausgestaltung der vorliegenden Erfindung umfasst das aus der dritten Kolonne in die vierte Kolonne eingespeiste Fluid zumindest einen Teil eines Seitenstroms, der mit einem geringeren Sauerstoffgehalt und einem höheren Argongehalt als die dritte Sumpfflüssigkeit aus der dritten Kolonne entnommen wird, wie bereits angesprochen. Der Seitenstrom wird dabei insbesondere im Bereich des sogenannten Argonübergangs aus der dritten Kolonne entnommen, er kann jedoch auch unterhalb davon entnommen werden. Ein entsprechender Seitenstrom stellt dabei insbesondere ein Gasgemisch dar, das einen höheren Argongehalt aufweist als die Sumpfflüssigkeit und einen geringeren Argongehalt als das Kopfgas.

Ein wesentliches Merkmal der soeben erläuterten Ausgestaltung der vorliegenden Erfindung kann insbesondere sein, dass durch Kondensieren von Kopfgas der ersten Kolonne eine Rücklaufflüssigkeit gebildet wird, und dass diese Rücklaufflüssigkeit flüssig auf die erste Kolonne zurückgeführt wird. Die Bildung der Rücklaufflüssigkeit "unter Verwendung" des Kopfgases kann dabei insbesondere umfassen, Kopfgas gasförmig aus der ersten Kolonne zu entnehmen, dieses in einem auch nachfolgend noch im Detail erläuterten Kondensatorverdampfer zumindest teilweise zu verflüssigen, und einen flüssigen Anteil zumindest teilweise auf die erste Kolonne zurückzuführen.

Zum erläuterten Kondensieren des Kopfgases der ersten Kolonne kann insbesondere ein flüssiger Kühlstrom im indirekten Wärmetausch gegen das Kopfgas verdampft oder teilverdampft. Zumindest ein Teil des verdampften oder teilverdampften Kühlstroms kann ferner arbeitsleistend auf einen Druck in dem sechsten Druckbereich, also den Betriebsdruck der zweiten Kolonne, entspannt und in die zweite Kolonne eingespeist werden. Der flüssige Kühlstrom kann insbesondere auf einem Druck in dem fünften Druckbereich bereitgestellt und vor der Verdampfung oder Teilverdampfung, beispielsweise mittels eines Ventils, auf einen etwas geringeren Druck, beispielsweise in einem Bereich zwischen dem fünften Druckbereich und dem sechsten Druckbereich, entspannt werden. Eine weitere Entspannung nach der Verdampfung auf einen Druck in dem sechsten Druckbereich vor der Einspeisung in die zweite Kolonne erfolgt dann stromab der Verdampfung in der erwähnten arbeitsleistenden Form.

Durch die vorliegende Erfindung wird in einer Alternative ein Verfahren mit geringerer Energieaufnahme als bisher in Entwicklung befindliche Verfahren geschaffen. Dies gilt insbesondere im Vergleich zu bekannten sogenannten SPECTRA-Verfahren und Varianten hiervon. Die vorliegende Erfindung kann aber auch grundsätzlich in Verbindung mit einem derartigen SPECTRA-Verfahren bzw. einer Variante hiervon zum Einsatz kommen.

Ein SPECTRA-Verfahren ist beispielsweise aus der EP 2 789 958 A1 und der dort zitierten Patentliteratur bekannt. Es handelt sich hierbei in der einfachsten Form um ein Einkolonnenverfahren. Ein SPECTRA-Verfahren kann aber auch um eine Sauerstoff- und Argongewinnung erweitert werden, indem weitere Kolonnen bereitgestellt werden. SPECTRA-Verfahren ermöglichen eine relativ hohe Sickstoffausbeute.

Der erwähnte fünfte Druckbereich liegt im Rahmen der vorliegenden Erfindung insbesondere bei 9 bis 12 bar, der sechste Druckbereich insbesondere bei 4 bis 6,5 bar und der siebte Druckbereich insbesondere bei 1 bis 2 bar. Der siebte Druckbereich kann aber auch weiter abgesenkt werden, insbesondere um 50 bis 200 mbar, beispielweise gegenüber dem eingangs in Bezug auf herkömmliche Luftzerlegungsanlagen genannten Druckwert von 1,4 bar. Entsprechend kann auch der zweite bzw. sechste Druckbereich um 120 bis 500 mbar, beispielweise gegenüber dem eingangs genannten Wert von 5,3 bar, abgesenkt werden. Eine entsprechende Druckabsenkung ist insbesondere möglich, weil, wie bereits erläutert, Gas aus einem Verdampfungsraum eines Kondensatorverdampfers, der Kopfgas der vierten Kolonne kondensiert, als Regeneriergas verwendet und eine Mindermenge durch entspannte Luft ausgeglichen wird wird. Dabei wird auch die treibende Temperaturdifferenz in diesem Kondensatorverdampfer verringert.

Bei der Druckabsenkung auf die genannten Werte bzw. der weiteren Druckabsenkung kann durch die Vergrößerung der Druckdifferenz zwischen dem fünften Druckbereich und dem sechsten Druckbereich bzw. die Absenkung des Austrittsdrucks bei der Entspannung die Kälteleistung entsprechend erhöht werden. Wie erwähnt, bezeichnen die Druckangaben hier jeweils Absolutdrücke am Kopf der Kolonnen. Der fünfte Druckbereich liegt damit oberhalb eines Drucks, der herkömmlicherweise für eine Hochdruckkolonne in einer Luftzerlegungsanlage verwendet wird. Die zweite Kolonne kann im Rahmen der vorliegenden Erfindung insbesondere auf einem niedrigeren Druckbereich betrieben werden als die herkömmlicherweise in einer Luftzerlegungsanlage eingesetzte Hochdruckkolonne. Es kann sich aber grundsätzlich auch um den gleichen Druck handeln.

Durch den Einsatz der vorliegenden Erfindung ist in der erläuterten Ausgestaltung insbesondere dann, wenn der zum Kondensieren des Kopfgases der ersten Kolonne und zum Verdampfen des Kühlstroms verwendete Kühlstrom unter Verwendung der ersten Sumpfflüssigkeit der ersten Kolonne gebildet wird, aufgrund der vorhandenen Druckverhältnisse keine Pumpe zum Fördern von flüssigem Stickstoff notwendig. Damit erfolgt ein geringerer Wärmeeintrag ins Tieftemperatursystem und eine im Gegensatz zur grundsätzlich ebenfalls möglichen Verwendung eines sauerstoffreicheren Fluids liegt eine höhere treibende Temperaturdifferenz im wegen des geringeren Sauerstoffgehalts in der verdampfenden Flüssigkeit vor. Dadurch wird ein höherer Verdampfungsdruck ermöglicht und die Turbinenleistung wird entsprechend erhöht.

In dem erfindungsgemäß vorgeschlagenen Verfahren wird der ersten Rektifikationskolonne insbesondere ein stickstoffreiches Gas als Produkt entnommen, erwärmt und aus der Anlage auf einem Druck in dem fünften Druckbereich ausgeführt. Auf diese Weise kann ohne weitere Verdichtung ein Stickstoffprodukt in einem entsprechenden Druckbereich bereitgestellt werden.

Die vorliegende Erfindung kann in er erläuterten Ausgestaltung unterschiedliche Möglichkeiten zur Temperierung oder Nichttemperierung des Kühlstroms vorsehen, die jeweils gewisse energetische Vorteile bieten können. So kann der verdampfte oder teilverdampfte Kühlstrom oder zumindest dessen Teil, der arbeitsleistend entspannt und in die zweite Kolonne eingespeist wird, vor der Entspannung erwärmt werden. Hierzu kann insbesondere der Hauptwärmetauscher der Luftzerlegungsanlage verwendet werden. Auf diese Weise kann mittels entsprechender Kälte eine Abkühlung von Einsatzströmen vorgenommen und das Wärmetauscherprofil entsprechend angepasst werden. Der verdampfte oder teilverdampfte Kühlstrom oder zumindest dessen Teil, der arbeitsleistend entspannt und in die zweite Kolonne eingespeist wird, kann aber auch auf einer Temperatur, bei der er nach der Verdampfung oder Teilverdampfung vorliegt wird, der Entspannung zugeführt werden; es erfolgt also in dieser Ausgestaltung keine weitere Temperierung.

In einer Ausführungsform der vorliegenden Erfindung, die unter gegebenen Randbedingungen ebenfalls energetische Vorteile bieten kann, kann der verdampfte oder teilverdampfte Kühlstrom oder zumindest dessen Teil, der arbeitsleistend entspannt und in die zweite Kolonne eingespeist wird, auf einer Temperatur, auf der er einer zur Entspannung verwendeten Entspannungsmaschine entnommen wird, in die zweite Kolonne eingespeist werden. Alternativ kann auch nach der Entspannung eine Erwärmung erfolgen.

Ein Teil des Gasgemischs aus dem Verdampfungsraum des Kondensatorverdampfers, in dessen Kondensationsraum Kopfgas der vierten Kolonne kondensiert wird, und/oder auch zumindest ein Teil des Restgases aus dem oberen Bereich der dritten Kolonne, also zumindest ein Teil eines Gasgemischs, welches aus der dritten Kolonne entnommen wird, kann in einer Ausgestaltung der vorliegenden Erfindung zur Bildung eines Rückführstroms verwendet und dabei erwärmt, verdichtet, abgekühlt und in die zweite Kolonne eingespeist werden. Zum Erwärmen und Abkühlen des erwähnten Rückführstroms kann im Rahmen der vorliegenden Erfindung insbesondere der Hauptwärmetauscher der Luftzerlegungsanlage verwendet werden.

In einer besonders bevorzugten Ausgestaltung der vorliegenden Erfindung wird dem Verdampfungsraum des Kondensatorverdampfers, in dessen Kondensationsraum das Kopfgas der vierten Kolonne zumindest zum Teil kondensiert wird, ein Anteil der ersten Sumpfflüssigkeit zugeführt und einer Teilverdampfung unterworfen, wobei bei dieser Teilverdampfung das zuvor erwähnte Gasgemisch gebildet wird. Mit anderen Worten wird in dieser Ausgestaltung also ein Kopfkondensator einer Rohargonkolonne bzw. der einzigen vorhandenen Argonkolonne unter Verwendung von Sumpfflüssigkeit der ersten Kolonne gekühlt. Ist eine Reinargonkolonne als fünfte Kolonne vorhanden, kann auch deren Kopfkondensator, wie nachfolgend erläutert, unter Verwendung von entsprechender Sumpfflüssigkeit gekühlt werden.

Generell können verdampfte und unverdampfte Anteile der Sumpfflüssigkeit aus der ersten Kolonne, die in dem oder den Kondensatorverdampfern der vierten bzw. vierten und fünften Kolonne verwendet wurden, anschließend auch zumindest teilweise in die dritte Kolonne überführt werden (ggf. abzüglich des im Adsorber verwendeten Anteils), und zwar an einer Position, die dem Sauerstoffgehalt und Argongehalt dieser Fluide entspricht. Die Einspeisung von verdampften und unverdampften Anteilen kann daher im Wesentlichen an gleicher Stelle in die dritte Kolonne erfolgen. Die genannten Stoffströme können vereinigt oder getrennt voneinander in die dritte Kolonne überführt werden. Damit umfasst das aus der ersten Kolonne in die dritte Kolonne überführte Fluid entsprechende Flüssigkeit, d.h. zumindest einen Teil der ersten Sumpfflüssigkeit, die zur Kühlung des oder der Kopfkondensatoren der vierten oder der vierten und fünften Kolonne verwendet wurde. Gegebenenfalls kann auf eine Einspeisung von verdampften Anteilen aus dem oder den Kopfkondensatoren auch verzichtet werden und diese verdampften Anteile werden aus dem Verfahren ohne eine Einspeisung in die dritte Kolonne ausgeführt, wie für den Fall des Rückführstroms und des in dem Adsorber verwendeten Anteils erwähnt. Mit der unverdampften Flüssigkeit wird auch in diesem Fall ein Teil der ersten Sumpfflüssigkeit in die dritte Kolonne eingespeist.

Gemäß einer Ausgestaltung der vorliegenden Erfindung kann das aus der zweiten Kolonne in die dritte Kolonne eingespeiste Fluid zumindest einen Teil der zweiten Sumpfflüssigkeit, welcher ohne Verwendung einer Pumpe aus der zweiten Kolonne in die dritte Kolonne überführt wird, umfassen. Entsprechende Sumpfflüssigkeit kann dabei gemäß dieser Ausgestaltung lediglich aufgrund des Druckunterschieds zwischen der zweiten und der dritten Kolonne in die dritte Kolonne überführt werden. Er kann jedoch zuvor bzw. bei der Überführung auch gegen weitere Ströme unter Verwendung eines Unterkühlungsgegenströmers unterkühlt werden.

Kopfgas kann an einer definierten Entnahmeposition aus der ersten Kolonne entnommen und aus der Luftzerlegungsanlage als Stickstoffdruckprodukt in einem entsprechenden Druckbereich ausgeleitet werden.

Wie bereits erwähnt, kann die vorliegende Erfindung in Kombination mit einer Reinargonkolonne verwendet werden, also einer fünften Kolonne, in die Fluid aus der vierten Kolonne überführt wird, wobei das aus der vierten Kolonne überführte Fluid einen Argongehalt aufweist, der höher als in dem aus der dritten Kolonne entnommenen und zumindest zu einem Anteil in die vierte Kolonne überführten Gasgemisch ist. Die fünfte Kolonne wird also im Rahmen der vorliegenden Erfindung, wie grundsätzlich aus dem Bereich der Luftzerlegungstechnik bekannt, zur Gewinnung eines entsprechenden Argonprodukts eingesetzt.

Vorteilhafterweise wird dabei Kopfgas der fünften Kolonne mittels eines weiteren Kondensatorverdampfers kondensiert, in dem ein weiterer Anteil der zweiten Sumpfflüssigkeit einer Teilverdampfung unterworfen wird. Auf die obigen Erläuterungen wird ausdrücklich verwiesen.

Der Seitenstrom, der im Rahmen der vorliegenden Erfindung mit einem geringeren Sauerstoffgehalt und einem höheren Argongehalt als die dritte Sumpfflüssigkeit gebildet und aus der dritten Kolonne entnommen wird, kann insbesondere unter Erhalt eines an Sauerstoff abgereicherten Gasgemischs und einer sauerstoffreichen Flüssigkeit in einer weiteren Kolonne einer Aufbereitung unterworfen werden, wobei das an Sauerstoff abgereicherte Gasgemisch aus der weiteren Kolonne zumindest zu einem Anteil in die vierte Kolonne eingespeist werden kann. Auf diese Weise gelangt ein Teil des Seitenstroms über den Umweg der weiteren Kolonne in die vierte Kolonne. Die weitere Kolonne ist insbesondere zweiteilig ausgebildet und umfasst zwei übereinander angeordnete Teile, die durch einen fluiddichten Trennboden getrennt sind, wobei das an Sauerstoff abgereicherte Gasgemisch zumindest am Kopf des oberen Teils, ggf. aber auch am Kopf des unteren Teils, und die sauerstoffreiche Flüssigkeit aus dem Sumpf des unteren Teils entnommen wird. Der Seitenstrom aus der dritten Kolonne wird insbesondere gasförmig in einen unteren Bereich des oberen Teils eingespeist. Aus dem Sumpf des oberen Teils wird insbesondere Flüssigkeit entnommen und in die dritte Kolonne zurückgeführt. Sumpfflüssigkeit der vierten Kolonne wird insbesondere am Kopf des oberen Teils als Rücklauf aufgegeben, kann aber auch zu einem Teil auf den unteren Teil als Rücklauf aufgegeben werden. Der untere Teil erfüllt in einer derartigen Anordnung die Funktion einer (Hochrein-) Sauerstoffkolonne. Unterschiedliche Ausgestaltungen sind in den Figuren veranschaulicht.

Die vorliegende Erfindung erstreckt sich schließlich auch auf eine Luftzerlegungsanlage, zu deren Merkmalen ausdrücklich auf den entsprechenden unabhängigen Patentanspruch verwiesen wird. Insbesondere ist eine derartige Luftzerlegungsanlage zur Durchführung eines Verfahrens eingerichtet, wie es zuvor in unterschiedlichen Ausgestaltungen erläutert wurde, und diese weist hierzu jeweils eingerichtete Mittel auf. Zu Merkmalen und Vorteilen einer entsprechenden Luftzerlegungsanlage sei auf die Erläuterungen betreffend das erfindungsgemäße Verfahren ausdrücklich verwiesen.

Die Erfindung wird nachfolgend unter Bezugnahme auf die beigefügten Zeichnungen näher erläutert, die Ausgestaltungen der vorliegenden Erfindung und nicht erfindungsgemäße Ausführungsformen veranschaulichen.

### Figurenbeschreibung

In den Figuren 1 bis 4 sind Luftzerlegungsanlagen gezeigt, die jeweils Ausgestaltungen der vorliegenden Erfindung entsprechen. Die Luftzerlegungsanlagen gemäß den Figuren 1 bis 4 sind jeweils insgesamt mit den Bezugszeichen 100 bis 400 bezeichnet. Wenngleich die nachfolgenden Erläuterungen sich auf entsprechende Luftzerlegungsanlagen 100 bis 400 beziehen, betreffen diese entsprechende Verfahren in gleicher Weise.

Die in den Figuren 1 bis 4 dargestellten Luftzerlegungsanlagen 100 bis 400 sind mit einem Kolonnensystem ausgestattet, das jeweils insgesamt mit 10 bezeichnet ist. Die Kolonnensysteme 10 der Luftzerlegungsanlagen 100 bis 400 weisen dabei jeweils eine erste Kolonne 11, eine zweite Kolonne 12, eine dritte Kolonne 13 und eine vierte Kolonne 14 auf.

Die zweite Kolonne 12 und die dritte Kolonne 13 sind jeweils als Teile einer Doppelkolonne grundsätzlich bekannter Art ausgebildet. Auf die eingangs zitierte Fachliteratur zu Luftzerlegungsanlagen, insbesondere auf die Erläuterungen zu Figur 2.3A bei Häring (s.o.), in der eine entsprechende Doppelkolonne gezeigt ist, sei in diesem Zusammenhang ausdrücklich verwiesen.

Die erste Kolonne 11 ist separat zur zweiten Kolonne 12 und zur dritten Kolonne 13 ausgebildet. Die erste Kolonne 11 ist mit einem Kondensatorverdampfer 111 ausgestattet, der zur Kondensation von Kopfgas der ersten Kolonne 11 verwendet wird. In den Kondensatorverdampfer 111, der in den dargestellten Beispielen jeweils als Forced-Flow-Kondensatorverdampfer ausgebildet sein kann, wird jeweils Sumpfflüssigkeit aus der ersten Kolonne 11 eingespeist, die ohne Verwendung einer Pumpe gefördert wird.

Durch Kondensieren von Kopfgas der ersten Kolonne 11 wird jeweils eine Rücklaufflüssigkeit gebildet wird und die Rücklaufflüssigkeit wird auf die erste Kolonne 11 zurückgeführt. Zum Kondensieren des Kopfgases der ersten Kolonne 11 wird dabei jeweils ein flüssiger Kühlstrom, der unter Verwendung der erwähnten Sumpfflüssigkeit aus der ersten Kolonne 11 gebildet wird, gegen das Kopfgas der ersten Kolonne 11 verdampft oder teilverdampft. Zumindest ein Teil des verdampften oder teilverdampften Kühlstroms wird mittels einer Entspannungsmaschine 5 arbeitsleistend entspannt und in die zweite Kolonne 12 eingespeist.

Die zweite Kolonne 12 und die dritte Kolonne 13 stehen über einen innenliegenden Kondensatorverdampfer 121, den sogenannten Hauptkondensator, in wärmetauschender Verbindung miteinander. Der Hauptkondensator 121 dient einerseits zum Kondensieren eines Kopfgases der zweiten Kolonne 12 und andererseits zum Verdampfen einer Sumpfflüssigkeit der dritten Kolonne 13. Alternativ zu der hier veranschaulichten Ausgestaltung können die zweite Kolonne 12 und die dritte Kolonne 13 auch separat ausgebildet sein. Der Hauptkondensator 121 kann alternativ auch außenliegend ausgebildet sein. Unterschiedliche Arten von Kondensatorverdampfern sind als Hauptkondensatoren 121 verwendbar.

Die vierte Kolonne 14 dient in allen Luftzerlegungsanlagen 100 bis 400 gemäß den Figuren 1 bis 4 zur Argongewinnung. In den dargestellten Beispielen ist keine Rohargonkolonne vorhanden, sondern die Anlagen 100 bis 400 sind jeweils zur Entnahme eines Argonprodukts aus der vierten Kolonne 14 ausgebildet. Zu Roh- und Reinargonkolonnen und entsprechenden Modifikationen sei ebenfalls auf die obigen Zitate aus der Fachliteratur verwiesen.

Die vierte Kolonne ist mit einem Kondensatorverdampfer (Kopfkondensator) 141 ausgestattet, der Kopfgas kondensiert. Dieser wird mit einem Teil der Sumpfflüssigkeit aus der ersten Kolonne 11 gekühlt. Die verwendete Sumpfflüssigkeit wird zuvor durch einen Unterkühlungsgegenströmer 18 unterkühlt. Ein in dem Kopfkondensator 141 unverdampfter Anteil wird in den hier veranschaulichten Beispielen zumindest teilweise in die dritte Kolonne 13 eingespeist. Dagegen wird ein verdampfter Anteil zur Regeneration eines Adsorbers genutzt, wie nachfolgend noch erläutert.

In den Luftzerlegungsanlagen 100 bis 400 gemäß den Figuren 1 bis 4 ist eine weitere Kolonne 15 vorgesehen, in der ein Stoffaustausch zwischen einem Anteil eines Sumpfstroms aus der vierten Kolonne 14 und einem Seitenstrom aus der dritten Kolonne 13 vorgenommen und ein Anteil des Sumpfstroms aus der vierten Kolonne 14 an leichter flüchtigen Komponenten abgereichert wird. Die weitere Kolonne 15 weist einen oberen und einen unteren Bereich auf, die funktional vollständig voneinander getrennt sind. Weitere Details werden jeweils unten erläutert. Die weitere Kolonne 15 ist mit einem Kondensatorverdampfer 152 ausgebildet, der mit Kopfgas aus der zweiten Kolonne 12 beheizt wird.

Als direkt dem Kolonnensystem 10 zugeordnete Komponente ist in den Luftzerlegungsanlagen 100 bis 400 gemäß den Figuren 1 bis 4 eine Pumpe 19 vorhanden, die Sumpfflüssigkeit aus der vierten Kolonne 14 in die weitere Kolonne 15 zurückbefördert.

In den Luftzerlegungsanlagen 100 bis 400 gemäß den Figuren 1 bis 4 wird in der ersten Kolonne 11 eine Sumpfflüssigkeit gebildet, die hier als erste Sumpfflüssigkeit bezeichnet wird. In der zweiten Kolonne 12 werden entsprechend eine zweite Sumpfflüssigkeit, in der dritten Kolonne 13 eine dritte Sumpfflüssigkeit und in der vierten Kolonne 14 eine vierte Sumpfflüssigkeit gebildet. Zu den Druckbereichen, in denen die erste bis vierte Kolonne 11 bis 14 betrieben werden, und zu den Sauerstoff- bzw. Argongehalten ihrer jeweiligen Sumpfflüssigkeiten wird auf die obigen Erläuterungen hierzu verwiesen.

In der nachfolgend erläuterten Weise wird in sämtlichen Luftzerlegungsanlagen 100 bis 400 gemäß den Figuren 1 bis 4 Fluid aus der ersten Kolonne 11 zumindest in die zweite Kolonne 12 eingespeist. Ferner wird Fluid aus der zweiten Kolonne 12 zumindest in die dritte Kolonne 13 eingespeist und Fluid wird aus der vierten Kolonne 14 in die dritte Kolonne 13 eingespeist. In den Luftzerlegungsanlagen 100 bis 400 gemäß den Figuren 1 bis 4 umfasst das aus der dritten Kolonne 13 in die vierte Kolonne 14 eingespeiste Fluid zumindest einen Teil eines Seitenstroms, der mit einem geringeren Sauerstoffgehalt und einem höheren Argongehalt als die zweite Sumpfflüssigkeit aus der dritten Kolonne 13 entnommen wird. Die anderen genannten Fluide umfassen zumindest in den hier veranschaulichten Ausgestaltungen jeweils zumindest Teile der jeweiligen Sumpfflüssigkeiten. In allen Fällen kann eine direkte Einspeisung oder eine Einspeisung über einen zwischengeschalteten Kopfkondensator oder dergleichen und eine entsprechende Teileinspeisung erfolgen.

Nachfolgend wird zunächst die Luftzerlegungsanlage 100 gemäß Figur 1 näher erläutert. Die Erläuterungen zu den Luftzerlegungsanlagen 200, 300 und 400 gemäß den Figuren 2 bis 4 beziehen sich jeweils der Übersichtlichkeit halber nur auf die hiervon abweichenden Merkmale. In den Figuren 2, 3 und 4 sind identische Merkmale auch nur teilweise mit entsprechenden Bezugszeichen versehen.

In der Luftzerlegungsanlage 100 gemäß Figur 1 wird ein Luftstrom a aus der hier allgemein mit A bezeichneten Atmosphäre mittels eines Hauptluftverdichters 1 über einen nicht gesondert bezeichneten, schraffiert veranschaulichten Filter angesaugt, in einem ebenfalls nicht gesondert bezeichneten Nachkühler nachgekühlt und einem Direktkontaktkühler 2 zugeführt, der mit Kühlwasser W betrieben wird.

Nach der in dem Direktkontaktkühler 2 erfolgten Vorkühlung wird der weiter mit a bezeichnete Luftstrom in einer Adsorptionseinrichtung 3 in vielfach in der Literatur beschriebener Weise von Wasser und Kohlendioxid befreit. Die Adsorptionseinrichtung 3, zuvor auch allgemein als "Adsorber" bezeichnet, kann mittels eines Regeneriergasstroms z regeneriert werden. Die Bildung des Regeneriergasstroms z wird unten erläutert.

Der weiter entsprechend behandelte und damit aufgereinigte Luftstrom wird zu einem Teil, der hier weiter mit a bezeichnet ist, als Einsatzluftstrom a in das Destillationssäulensystem 10 warmseitig einem Hauptwärmetauscher 4 zugeführt. Der Einsatzluftstrom a wird dem Hauptwärmetauscher 4 kaltseitig bzw. nahe an dessen kaltem Ende entnommen und in die erste Kolonne 11 eingespeist. Ein weiterer Teil des aufgereinigten Luftstroms kann dagegen, wie hier mit einem Teilstrom a' veranschaulicht und unten erläutert, bei der Bildung des Regeneriergasstroms z verwendet werden.

Die Sumpfflüssigkeit der ersten Kolonne 11 wird aus dieser abgezogen und in zwei Teilströme d und e aufgeteilt. Der Teilstrom d wird hier in den Kondensatorverdampfer 111 eingespeist und dabei teilweise verdampft. In einem stromab angeordneten Abscheider 111' werden ein flüssiger und ein verdampfter Anteil voneinander getrennt. Anschließend wird der verdampfte in einer Entspannungsmaschine 5, die mit einem Generator G gekoppelt ist, auf den Betriebsdruck der zweiten Kolonne 12 entspannt und in einem unteren Bereich in diese zweite Kolonne 12 eingespeist. Der nicht verdampfte Anteil wird dagegen in Form eines Stoffstroms d" in die dritte Kolonne 13 eingespeist.

Der Teilstrom e wird dagegen durch den Unterkühlungsgegenströmer 18 und anschließend durch den Kondensatorverdampfer 141 geführt. Ein Teil kann auch, wie in Form einer Verknüpfung f veranschaulicht, in die zweite Kolonne 12 eingespeist werden. In dem Kopfkondensator 141 gebildetes Gas kann zur Bildung des Regeneriergasstroms z verwendet werden. Es ist der besseren Anschaulichkeit halber ab der Entnahmestelle aus dem Kopfkondensator mit z' bezeichnet. Es wird dazu zunächst in dem Unterkühlungsgegenströmer 18 und danach im Hauptwärmetauscher 4 erwärmt. Ein flüssig verbleibender Anteil aus dem Kondensatorverdampfer 141 bzw. dessen Verdampfungsraum wird, wie hier in Form eines Stoffstroms g veranschaulicht, in die dritte Kolonne 13 eingespeist.

Das Kopfgas der ersten Kolonne 11 wird teilweise in Form eines Stoffstroms h durch den Kondensationsraum des Kopfkondensators 111 geführt und als flüssiger Rücklauf auf die erste Kolonne 11 zurückgeführt. Ein weiterer Anteil des Kopfgases der ersten Kolonne 11 wird in Form eines Stoffstroms i im Hauptwärmetauscher 4 erwärmt und als gasförmiges Stickstoffdruckprodukt aus der Luftzerlegungsanlage 100 ausgeleitet oder anderweitig verwendet.

Die Sumpfflüssigkeit der zweiten Kolonne 12 wird aus dieser in Form eines Stoffstroms j abgezogen, durch den Unterkühlungsgegenströmer 18 geführt, und in die dritte Kolonne 13 eingespeist. Das Kopfgas der zweiten Kolonne 12 wird teilweise in Form eines Stoffstroms k durch den Kondensationsraum des Hauptkondensators 121 geführt, dort verflüssigt und wiederum zum Teil als flüssiger Rücklauf auf die zweite Kolonne 12 zurückgeführt. Ein weiterer Anteil wird in Form eines Stoffstroms I im Kondensationsraum des Kondensatorverdampfers 152 verflüssigt. Dieser weitere Anteil wird mit dem im Kondensationsraum des Hauptkondensators 121 verflüssigten Anteil vereinigt, wie in Form der Verknüpfung I veranschaulicht. Entsprechende Flüssigkeit kann auch mittels einer Pumpe 6 als Rücklauf auf die erste Kolonne 11 aufgegeben werden. Die Pumpe 6 fördert einen flüssigen, stickstoffreichen Strom b, der in einem oberen Bereich aus der zweiten Kolonne 12 entnommen wird. Ein weiterer Anteil von Kopfgas aus der zweiten Kolonne 12 wird in Form eines Stoffstroms c aus der Anlage ausgeführt.

Die Sumpfflüssigkeit der dritten Kolonne 13 wird aus dieser in Form eines Stoffstroms o abgezogen, mittels einer Innenverdichtungspumpe 7 flüssig auf Druck gebracht, in dem Hauptwärmetauscher 4 durch Erwärmen in den gasförmigen oder kritischen Zustand überführt und als gasförmiges Sauerstoffdruckprodukt aus der Luftzerlegungsanlage 100 ausgeleitet oder anderweitig verwendet. Oberhalb des Sumpfs aus der dritten Kolonne 13 in Form eines Stoffstroms p entnommenes Gas wird dagegen mit Restgas aus der dritten Kolonne 13 (siehe unten) zu einem Sammelstrom q vereinigt, der anschließend im Hauptwärmetauscher 4 erwärmt und aus der Luftzerlegungsanlage 100 ausgeleitet oder anderweitig verwendet wird. Das Kopfgas der dritten Kolonne 13 wird in Form eines Stoffstroms r durch den Unterkühlungsgegenströmer 18 geführt und mit dem Stoffstrom o wie erwähnt zu dem Sammelstrom q vereinigt.

Aus der dritten Kolonne 13 wird ferner ein Seitenstrom t gasförmig abgezogen und zunächst in einen oberen Teil der weiteren Kolonne 15 eingespeist. Aus dem oberen Teil der weiteren Kolonne 15 wird dagegen ein Stoffstrom u flüssig in die dritte Kolonne 13 zurückgeführt. In dem oberen Teil der weiteren Kolonne 15 wird dabei ein Stoffaustausch mit Sumpfflüssigkeit aus der vierten Kolonne 14 vorgenommen, die in in Form eines Stoffstroms v in den oberen und den unteren Teil der weiteren Kolonne 15 flüssig aufgegeben wird.

Im unteren Teil der weiteren Kolonne 15 werden leichter flüchtige Komponenten durch Erwärmen mittels des Kondensatorverdampfers 152 ausgetrieben. Aus dem oberen und dem unteren Teil der weiteren Kolonne 15 wird jeweils Gas abgezogen, das in Form eines Stoffstroms w in die vierte Kolonne 14 eingespeist wird. Die weitere Kolonne 15 kann in sämtlichen hier veranschaulichten Beispielen beispielsweise auch jeweils oberhalb des Kopfkondensators 111 der ersten Kolonne 11 angeordnet sein.

Sumpfflüssigkeit aus dem unteren Teil der weiteren Kolonne 15 wird in Form eines Stoffstroms x abgezogen und im dargestellten Beispiel in ein Tanksystem T eingespeist. Bei Bedarf wird aus dem Tanksystem T ein der Übersichtlichkeit halber ebenfalls mit x bezeichneter Stoffstrom entnommen, in dem Hauptwärmetauscher 4 verdampft und als hochreines, gasförmiges Sauerstoffprodukt ausgeführt.

Aus der vierten Kolonne 14 wird in Form eines Stoffstroms y argonreiche Flüssigkeit entnommen mittels einer weiteren Innenverdichtungspumpe 8 flüssig auf Druck gebracht, in dem Hauptwärmetauscher 4 durch Erwärmen in den gasförmigen oder kritischen Zustand überführt, und als gasförmiges Argondruckprodukt aus der Luftzerlegungsanlage 100 ausgeleitet oder anderweitig verwendet.

Als weitere Produkte der Anlage 100 können Flüssigstickstoff, Flüssigsauerstoff (ggf. auch mit unterschiedlichen Reinheiten) und Flüssigargon bereitgestellt werden, wie grundsätzlich bekannt und beispielsweise in Form eines Teilstroms des verflüssigten Kopfgases h der ersten Kolonne 11 dargestellt.

In der Luftzerlegungsanlage 100 gemäß Figur 1 wird der Teilstrom a' der in dem Hauptluftverdichter 1 verdichteten und aufbereiteten Luft, wie erwähnt, bei der Bildung des Regeneriergasstroms z verwendet. Dieser Teilstrom a' wird im Hauptwärmetauscher 4 teilabgekühlt, in einer Generatorturbine 101 arbeitsleistend entspannt, im Hauptwärmetauscher 4 mit dem Stoffstrom z' aus dem Kondensatorverdampfer 141 vereinigt, und gemeinsam mit diesem im Hauptwärmetauscher 4 erwärmt.

In der Luftzerlegungsanlage 200 gemäß Figur 2 sind im Gegensatz dazu für die Erwärmung des entspannten Teilstroms a' und des Stoffstroms z' separate Passagen im Hauptwärmetauscher 4 bereitgestellt und die Vereinigung erfolgt warmseitig des Hauptwärmetauschers 4.

In der Luftzerlegungsanlage 300 gemäß Figur 3 werden gegenüber der Luftzerlegungsanlage 100 gemäß Figur 1 die Stoffströme p und r separat durch den Hauptwärmetauscher 4 geführt.

Ein dem Stoffstrom j gemäß Figur 1 entsprechender Stoffstrom wird hier nicht gebildet. Vielmehr wird hier die Sumpfflüssigkeit aus der zweiten Kolonne 12 in Form eines Stoffstroms j' in den Kondensatorverdampfer 141 eingespeist. Auch ein dem Stoffstrom e entsprechender Stoffstrom wird nicht gebildet.

Warmseitig des Hauptluftverdichters 4 wird der Stoffstrom r in einer Verdichteranordnung 602 verdichtet, mit einem Teilstrom des Stoffstroms c vereinigt, in der Verdichteranordnung 602 weiter verdichtet, und dem Stoffstrom i zugespeist.

Der Doppelsäulenteil aus der zweiten Kolonne 12 und der dritten Kolonne 13 wird bei dieser Ausführung (anders als in den Ausgestaltungen gemäß den Figuren 1, 2 und 4) nicht unter einem abgesenkten, sondern unter einem angehobenen Druck betrieben, da das Kühlen des Kondensatorverdampfers 141 mit Sumpfflüssigkeit der zweiten Kolonne 12 mit einem Sauerstoffgehalt von ca. 45 bis 60%, insbesondere mit ca. 52% erfolgt. Um mit diesem (relativ warmen) Strom das Gas am Kopf der vierten Kolonne 14 kondensieren zu können, muss der Druck in der dritten Kolonne, wie erwähnt, etwas angehoben werden und liegt demnach etwas über den Druck im Verdampfungsraum des Kondensatorverdamfers 141. Dies wirkt sich zwar nachteilig auf die Kälteleistung der Entspannungsturbine 5 aus, der höhere Druck in der dritten Kolonne 13 geht aber nicht "verloren", da dadurch ein höherer Ansaugdruck und (als Folge) eine geringere Leistungsaufnahme an einem hier nicht veranschaulichten Niederdruckstickstoffverdichter erreicht wird.

In einer Ausgestaltung der Luftzerlegungsanlage 300 gemäß Figur 3 ist es grundsätzlich auch möglich, den Austrittsdruck der Generatorturbine 101 bzw. einer anderen Entspannungsmaschine niedriger wählen, als er für die Regeneration des Adsorbers 3 erforderlich ist. Der entspannte Strom kann nach Anwärmung im Hauptwärmetauscher 4 auch z.B. in die Atmosphäre abgeblasen werden. Der Ausgleich der Regeneriergasmenge könne in diesem Fall durch Zuspeisung vom gasförmigen Sauerstoff aus der dritten Kolonne 13 (die in diesem Fall unter angehobenem Druck betrieben wird) erfolgen. Auf diese Weise reduziert sich die Menge an gasförmigen Sauerstoff, der als Produkt zur Verfügung steht.

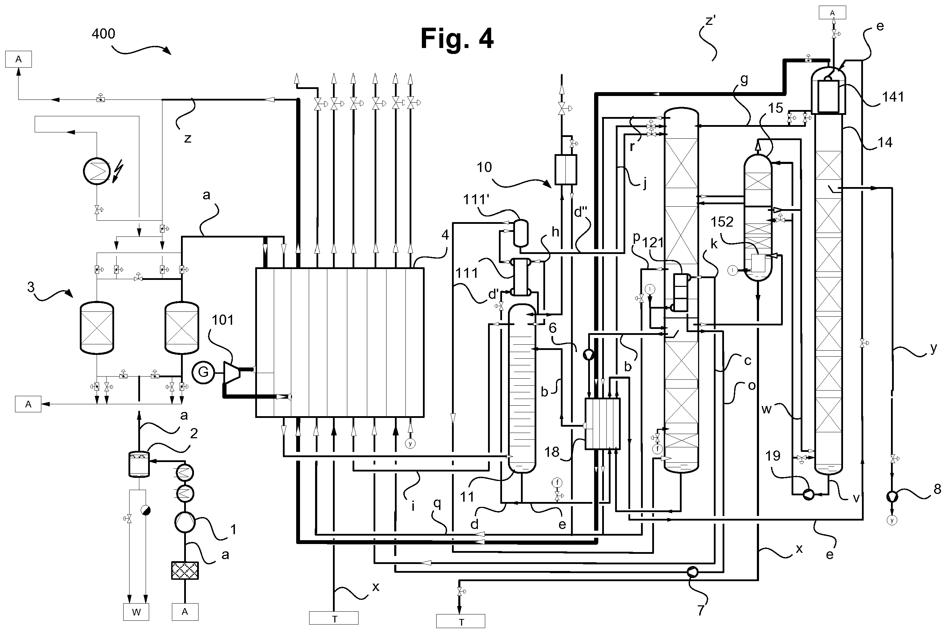

Wie in Figur 4 anhand der Luftzerlegungsanlage 400 veranschaulicht, kann bei geringeren Betriebsdrücken in der ersten Kolonne 11 und damit geringeren Stickstoffproduktdrücken auch auf die Entspannungsmaschine 5 verzichtet werden. In allen Fällen kann anstelle eines Generators G auch eine andere bremsende Einheit mit der Entspannungsmaschine 5 gekoppelt sein.

## Patentansprüche

1. Verfahren zur Tieftemperaturzerlegung von Luft, bei dem eine Luftzerlegungsanlage (100, 200, 300, 400) mit einem zur Tieftemperaturrektifikation eingerichteten Kolonnensystem (10) verwendet wird, welches mit Druckluft gespeist wird, die verdichtet und unter Verwendung eines Adsorbers (3) an Wasser und Kohlendioxid abgereichert wird, wobei der Adsorber (3) unter Verwendung eines Regeneriergasstroms regeneriert wird, der unter Verwendung eines Gasgemischs gebildet wird, das dem Kolonnensystem (10) entnommen wird, **dadurch gekennzeichnet, dass** eine Kolonne (14) in dem Kolonnensystem (10) zur Gewinnung oder Ausschleusung von Argon oder eines argonreichen Komponentengemischs verwendet und unter Verwendung eines Seitenstroms gespeist wird, welcher einer weiteren Kolonne (13) in dem Kolonnensystem (10) entnommen wird, wobei der Regeneriergasstrom ohne Verwendung von Fluid aus der weiteren Kolonne (13) gebildet wird, und dass der Regeneriergasstrom ferner unter Verwendung weiterer Druckluft gebildet wird, welche zusammen mit der Druckluft, mit der das Kolonnensystem (10) gespeist wird, verdichtet und danach entspannt und mit dem Gasgemisch, das dem Kolonnensystem der Luftzerlegungsanlage entnommen und zur Bildung des Regeneriergasstroms verwendet wird, vereinigt wird.

2. Verfahren nach Anspruch 1, bei dem die Druckluft, mit der das Kolonnensystem (10) gespeist wird, und die weitere Druckluft, unter Verwendung derer der Regeneriergasstrom gebildet wird, auf einen Druck in einem ersten Druckbereich verdichtet wird, bei dem der Regeneriergasstrom dem Adsorber (3) auf einem Druck in einem zweiten Druckbereich unterhalb des ersten Druckbereichs zugeführt wird, bei dem das Gasgemisch, das dem Kolonnensystem (10) entnommen und unter Verwendung dessen der Regeneriergasstrom gebildet wird, dem Kolonnensystem (10) auf einem dritten Druckniveau oberhalb des zweiten Druckniveaus entnommen wird, und bei dem die weitere Druckluft auf einen Druck in einem vierten Druckbereich zwischen dem zweiten und dem dritten Druckbereich oder auf einen Druck in dem dritten Druckbereich entspannt wird.

3. Verfahren nach Anspruch 1 oder 2, bei dem der Teil der Druckluft, der zur Bildung des Regeneriergasstroms verwendet wird, arbeitsleistend entspannt und nach der Entspannung zumindest zu einem Anteil im Hauptwärmetauscher (4) der Luftzerlegungsanlage (100, 200) erwärmt wird.

4. Verfahren nach Anspruch 3, bei dem die Erwärmung im Hauptwärmetauscher (4) getrennt von oder gemeinsam mit dem Gasgemisch, das dem Kolonnensystem (10) entnommen und das zur Bildung des Regeneriergasstroms verwendet wird, oder einem Anteil hiervon, vorgenommen wird.

5. Verfahren nach einem der Ansprüche 3 oder 4, bei dem der Teil der Druckluft, der zur Bildung des Regeneriergasstroms verwendet wird, oder ein Anteil hiervon, in dem Hauptwärmetauscher (4) auf eine Temperatur in einem ersten Temperaturbereich abgekühlt, unter Abkühlung auf eine Temperatur in einem zweiten Temperaturbereich unterhalb des ersten Temperaturbereichs auf den vierten Druckbereich entspannt, und auf der Temperatur in dem zweiten Temperaturbereich dem Hauptwärmetauscher (4) zur Erwärmung zugeführt wird.

6. Verfahren nach einem der vorstehenden Ansprüche, bei dem das Gasgemisch, das dem Kolonnensystem (10) entnommen und zur Bildung des Regeneriergasstroms verwendet wird, ein Gasgemisch ist, das einem Verdampfungsraum eines Kondensatorverdampfers (141) entnommen wird, in dessen Kondensationsraum Kopfgas der zur Gewinnung oder Ausschleusung von Argon oder eines argonreichen Komponentengemischs eingerichteten Kolonne (14) kondensiert wird.

7. Verfahren nach einem der vorstehenden Ansprüche, bei dem das Gasgemisch, das dem Kolonnensystem (10) entnommen und zur Bildung des Regeneriergasstroms verwendet wird, 25 bis 60 Molprozent Sauerstoff und im verbleibenden Rest überwiegend Stickstoff aufweist.

8. Verfahren nach Anspruch 6, bei dem die weitere Kolonne (13) bei einem geringeren oder höheren Druck als der Verdampfungsraum des Kondensatorverdampfers (141) betrieben wird, und wobei der weiteren Kolonne (13) eine sauerstoffreiche Sumpfflüssigkeit entnommen wird.

9. Verfahren nach Anspruch 7 oder 8, bei dem das Kolonnensystem (10) eine erste Kolonne (11), eine zweite Kolonne (12), die weitere Kolonne als eine dritte Kolonne (13) und die zur Gewinnung oder Ausschleusung von Argon oder des argonreichen Komponentengemischs eingerichtete Kolonne als eine vierte Kolonne (14) aufweist, wobei
a) in der ersten Kolonne (11) eine erste Sumpfflüssigkeit gebildet wird, in der zweiten Kolonne (12) eine zweite Sumpfflüssigkeit gebildet wird, in der dritten Kolonne (13) die sauerstoffreiche Sumpfflüssigkeit als eine dritte Sumpfflüssigkeit gebildet wird und in der vierten Kolonne (14) eine vierte Sumpfflüssigkeit gebildet wird,
b) die erste Kolonne (11) in einem fünften Druckbereich betrieben wird, die zweite Kolonne (12) in einem sechsten Druckbereich, der unterhalb des fünften Druckbereichs liegt, betrieben wird und die dritte Kolonne (13) in dem Druckbereich zwischen dem zweiten und dem dritten Druckbereich oder in dem Druckbereich oberhalb des dritten Druckbereich als einem siebten Druckbereich, der unterhalb des sechsten Druckbereichs liegt, betrieben wird,
c) die zweite Sumpfflüssigkeit mit einem höheren Sauerstoffgehalt und einem höheren Argongehalt als die erste Sumpfflüssigkeit gebildet wird und die dritte Sumpfflüssigkeit mit einem höheren Sauerstoffgehalt und einem geringeren Argongehalt als die zweite Sumpfflüssigkeit gebildet wird,
d) Fluid aus der ersten Kolonne (11) zumindest in die zweite Kolonne (12), Fluid aus der zweiten Kolonne (12) zumindest in die dritte Kolonne (13), Fluid aus der dritten Kolonne (13) zumindest in die vierte Kolonne (14) und Fluid aus der vierten Kolonne (14) zumindest in die dritte Kolonne (13) eingespeist wird, und
e) das aus der dritten Kolonne (13) in die vierte Kolonne (14) eingespeiste Fluid zumindest einen Teil eines Seitenstroms umfasst, der mit einem geringeren Sauerstoffgehalt und einem höheren Argongehalt als die dritte Sumpfflüssigkeit aus der dritten Kolonne (13) entnommen wird.

10. Verfahren nach Anspruch 9, bei dem
f) durch Kondensieren von Kopfgas der ersten Kolonne (11) eine Rücklaufflüssigkeit gebildet wird und die Rücklaufflüssigkeit flüssig auf die erste Kolonne (11) zurückgeführt wird,
g) zum Kondensieren des Kopfgases der ersten Kolonne (11) ein flüssiger Kühlstrom im indirekten Wärmetausch gegen das Kopfgas verdampft oder teilverdampft wird, und
h) zumindest ein Teil des verdampften oder teilverdampften Kühlstroms auf einen Druck in dem sechsten Druckbereich arbeitsleistend entspannt und in die zweite Kolonne (12) eingespeist wird.

11. Verfahren nach Anspruch 10, bei dem der Kühlstrom unter Verwendung zumindest eines Anteils der ersten Sumpfflüssigkeit gebildet wird.

12. Verfahren nach einem der Ansprüche 9 bis 11, bei dem der Verdampfungsraum des Kondensatorverdampfers (141) mit zumindest einem Teil der ersten oder zweiten Sumpfflüssigkeit gespeist wird.

13. Luftzerlegungsanlage (100, 200, 300, 400) mit einem zur Tieftemperaturrektifikation eingerichteten Kolonnensystem (10) verwendet wird, und mit Mitteln, die zur Speisung des Kolonnensystems (10) mit verdichteter Druckluft und zur Abreicherung der Druckluft an Wasser und Kohlendioxid unter Verwendung eines Adsorbers (3) eingerichtet sind, wobei der Adsorber (3) unter Verwendung eines Regeneriergasstroms regenerierbar ist, der unter Verwendung eines Gasgemischs bereitstellbar ist, das dem Kolonnensystem (10) entnehmbar ist , **dadurch gekennzeichnet, dass** eine Kolonne (14) in dem Kolonnensystem (10) zur Gewinnung oder Ausschleusung von Argon oder eines argonreichen Komponentengemischs eingerichtet und unter Verwendung eines Seitenstroms speisbar ist, welcher einer weiteren Kolonne (13) in dem Kolonnensystem (10) entnommen wird, wobei der Regeneriergasstrom ohne Verwendung von Fluid aus der weiteren Kolonne (13) gebildet wird, und dass der Regeneriergasstrom ferner unter Verwendung weiterer Druckluft bereitstellbar ist, indem diese weitere Druckluft zusammen mit der Druckluft, mit der das Kolonnensystem (10) gespeist wird, verdichtet und danach entspannt und mit dem Gasgemisch, das dem Kolonnensystem der Luftzerlegungsanlage entnommen und zur Bildung des Regeneriergasstroms verwendet wird, vereinigt wird.

14. Luftzerlegungsanlage (100, 200, 300, 400) nach Anspruch 12, bei der das Kolonnensystem (10) einen Kondensatorverdampfer (141) aufweist, in dessen Kondensationsraum Kopfgas einer zur Gewinnung oder Ausschleusung von Argon oder eines argonreichen Komponentengemischs eingerichteten Kolonne (14) kondensierbar ist, wobei das Gasgemisch, das zur Bildung des Regeneriergasstroms verwendet wird, einem Verdampfungsraum des Kondensatorverdampfers (141) entnehmbar ist.

15. Luftzerlegungsanlage (100, 200) nach Anspruch 13, die ein Kolonnensystem (10) mit einer ersten Kolonne (11), einer zweiten Kolonne (12), einer dritten Kolonne (13) und einer vierten Kolonne (14) aufweist, wobei die vierte Kolonne (14) die zur Gewinnung oder Ausschleusung von Argon oder des argonreichen Komponentengemischs eingerichtete Kolonne darstellt und mit dem Kondensatorverdampfers (141) betreibbar ist.
